(19) Europäisches Patentamt
European Patent Office
Office européen des brevets

(11) **EP 1 643 414 B1**

(12) **EUROPEAN PATENT SPECIFICATION**

(45) Date of publication and mention
of the grant of the patent:
**09.05.2007 Bulletin 2007/19**

(51) Int Cl.:
***G06K 9/00*** *(2006.01)*

(21) Application number: **05021329.7**

(22) Date of filing: **29.09.2005**

(54) **Plain four-finger image determination device, plain four-finger image determination method and plain four-finger image determination program**

Anordnung, Verfahren und Programm zur Bestimmung eines einfachen Vierfinger-Bildes

Appareil, procédé et programme d'ordinateur pour déterminer une image simple à quatre doigts

(84) Designated Contracting States:
**DE FR**

(30) Priority: **29.09.2004 JP 2004283436**

(43) Date of publication of application:
**05.04.2006 Bulletin 2006/14**

(73) Proprietor: **NEC CORPORATION**
**Tokyo (JP)**

(72) Inventor: **Hara, Masanori**
**Minato-ku**
**Tokyo (JP)**

(74) Representative: **Niederkofler, Oswald et al**
**Samson & Partner**
**Patentanwälte**
**Widenmayerstrasse 5**
**80538 München (DE)**

(56) References cited:
**US-A- 5 337 369       US-A1- 2003 142 856**

- **NEW YORK STATE POLICE, DIVISION OF CRIMINAL JUSTICE SERVICES: "Fingerprint procedures and practices course, level II" SLIDE PRESENTATION, June 2003 (2003-06), XP002357170 Retrieved from the Internet: URL: http://criminaljustice.state.ny.us/ops /docs> [retrieved on 2005-12-01]**
- **SINGH I ET AL: "Determination of the hand from single digit fingerprint: a study of whorls" FORENSIC SCIENCE INTERNATIONAL, ELSEVIER SCIENTIFIC PUBLISHERS IRELAND LTD, IE, vol. 152, no. 2-3, 10 September 2005 (2005-09-10), pages 205-208, XP004948717 ISSN: 0379-0738**
- **SINGH I.; PRASANTA KUMAR CHATTOPADHYAY: 'DETERMINATION OF THE HAND FROM SINGLE DIGIT FINGER PRINT' IAFS. MEETING OF THE INTERNATIONAL ASSOCIATION OF FORENSIC SCIENCES vol. 4, August 1996, pages 167 - 179, XP001207785**

**Description**

## BACKGROUND OF THE INVENTION

Field of the Invention

The present invention relates to a plain four-finger image determination device and, more particularly, to a plain four-finger image determination device, a plain four-finger image determination method and an image determination program which enable accurate determination of hands and determination of a kind of finger from a plain four-finger image.

2. Description of the Related Art

In general, because a fingerprint formed of numbers of striped ridge lines has two distinctive features of being unchanged lifelong and of being unique in every man, it has been widely used from old times as a means for identifying a person.

In recent years, the United States has been making personal identification of those who enter the States be more and more strict aiming at protecting the main land of the States. As one of the means thereof, personal identification using a fingerprint has been started.

A fingerprint for the use of personal identification is mostly input for each finger, while there exists a means by which fingerprints of a plurality of fingers are input at once because inputting a plurality of times is laborious. Already put into a practical use is, for example, a live scanner which scans four fingers, an index finger, a middle finger, a ring finger and a little finger at once.

Thus scanned image is called a plain four-finger impression image or a plain four-finger image because it includes finger-print images of four fingers. Plain impression here is named because only an impression of a plain part is taken without rolling a finger unlike a rolled impression which is used in police.

A live scanner capable of capturing a plain four-finger image is realized, for example, in USP 5,650,842, entitled "Device and method for obtaining a plain image of multiple fingerprints" (Patent Literature 1).

The method disclosed in Patent Literature 1 has an advantage, in addition to an advantage that fingerprints of a plurality of fingers can be captured at once from a plain four-finger image with ease, an advantage that erroneous capture of a fingerprint (a fingerprint of a different finger from that is supposed to be taken is captured), which is liable to occur in finger-basis scan, can be prevented.

In plain four-finger scan, however, it has been difficult to prevent erroneous scan taking a right hand as a left hand by mistake or scan vice versa.

Under these circumstances, the National Institute of Standards and Technology of the U.S. launched the project "Plain Fingerprint Segmentation Evaluation 2004" for assessing performance of a function of automatically capturing a plain four-finger image. Details of the project are shown on the web, http://fingerprint.nist.gov/slapseg04/ (as of July 6, 2004). One of the targets to be achieved in this assessment is automatic determination whether it is a right hand or a left hand.

As described in the foregoing, while there is a need of determining between a right hand and a left hand of a plain four-finger image, techniques thereof are yet to be established. Also demanded is a system which has high hand determination precision and is capable of accurately determining between a right hand and a left hand, even with respect to a particular plain four-finger image that is supposed to be input by a person to be examined with malicious intentions.

The above-described conventional techniques have the following problems.

While the method disclosed in Patent Literature 1 enables erroneous capture of a fingerprint (a fingerprint of a different finger from that is supposed to be taken is captured), which is liable to occur in finger-basis scan, to be prevented, it is difficult to prevent erroneous scan taking a right hand as a left hand by mistake and scan vice versa in scanning plain four fingers. Therefore, it is impossible to prevent a person to be examined with malicious intentions who inputs an image of an opposite hand from unlawfully passing an examination.

Although for preventing such erroneous scan taking a right hand as a left hand and vice versa and preventing unlawful pass of an examination by a person to be examined with malicious intentions by inputting a four-finger image of his/her opposite hand, making accurate determination of hands and determination of a kind of finger from an input plain four-finger image is extremely effective, a useful technique for this purpose is yet to be proposed at this stage, so that demanded is establishment of a technique enabling determination of hands and determination of a kind of finger to be made with high precision. Kind of finger here represents a type of finger such as a forefinger (index finger) or a middle finger.

US 2003/0142856 A1 discloses to determine whether a hand is a right hand or a left hand by measuring relative finger leng?? and verifying, for example on the basis of the longest finger, finger positions with respect to a sensor, on the basis of which result hand determination is carried out.

"Fingerprint procedures & practises", caused level II, New York State Police, Division of Criminal Justice Service, June 2003, discloses to employ which line directions of fingerprints to distinguish between right and left hands.

## SUMMARY OF THE INVENTION

A first object of the present invention is to eliminate the shortcomings of the above-described conventional techniques and provide a plain four-finger image determination device, a plain four-finger image determination method and an image determination program which enable accurate determination of hands and determination of a kind of finger from a plain four-finger image.

A second object of the present invention is to provide a plain four-finger image determination device, a plain four-finger image determination method and an image determination program which enable determination of hands and determination of a kind of finger even from such a plain four-finger image having bad quality as is input by a person to be examined by mistake.

The invention provides a plain four-finger image determination device according to claim 1.

In the preferred construction, when in a fingerprint image of four fingers, three or more fingers have the ridge line directions inclining down right, determination is made that the fingers are of a right hand.

In another preferred construction, when in the fingerprint image of four fingers, three or more fingers have the ridge line directions inclining down left, determination is made that the fingers are of a left hand.

In another preferred construction, when in the fingerprint image of four fingers, two or more fingers have the ridge line directions inclining down right and not more than one finger has the ridge line direction inclining down left, determination is made that the fingers are of a right hand.

In another preferred construction, when in the fingerprint image of four fingers, two or more fingers have the ridge line directions inclining down left and not more than one finger has the ridge line direction inclining down right, determination is made that the fingers are of a left hand.

The plain four-finger image determination device comprises a unit which extracts a core of a fingerprint from a fingerprint image of each finger cut out from the plain four-finger image, and a unit which verifies a kind of finger based on a relationship of heights of cores of fingerprints in the respective fingers.

In the preferred construction, assuming that in the fingerprint image of four fingers, heights of cores of fingerprints in the respective fingers are represented as $Y1$, $Y2$, $Y3$ and $Y4$, respectively, from left, when the relationship $Y2>Y3>Y1>Y4$ holds, determination is made that the fingers are of a right hand.

In another preferred construction, assuming that in the fingerprint image of four fingers, heights of cores of fingerprints in the respective fingers are represented as $Y1$, $Y2$, $Y3$ and $Y4$, respectively, from left, when the relationship $Y3>Y2>Y4>Y1$ holds, determination is made that the fingers are of a left hand.

In another preferred construction, assuming that in the fingerprint image of four fingers, heights of cores of fingerprints of three fingers are represented as $Y1$, $Y2$ and $Y3$, respectively, from left, when the relationship $Y2>Y3>Y1$ or $Y1>Y2>Y3$ holds, determination is made that the fingers are of a right hand.

In another preferred construction, assuming that in the fingerprint image of four fingers, heights of cores of fingerprints of three fingers are represented as $Y1$, $Y2$ and $Y3$, respectively, from left, when the relationship $Y2>Y1>Y3$ or $Y3>Y2>Y1$ holds, determination is made that the fingers are of a left hand.

The plain four-finger image determination device comprises a unit which cuts out a fingerprint image of each finger from the plain four-finger image.

Moreover, according to the invention, to the hand determination and determination of a kind of finger made based on the relationship of heights of cores of the fingerprints and the combination of tendencies of the ridge line directions as a determination result, confidence of a predetermined value indicative of probability of each determination is set to ultimately decide the determination of a kind of hand and determination of a kind of finger based on confidence obtained by merging the confidences of both the determination results.

In another preferred construction, when confidence obtained by merging the confidences is larger than a preset threshold value, determination is made that the hand determination and kind of finger indicated by the determination result are ultimate hand determination and kind of finger and when the confidence obtained by merging is smaller than the threshold value, determination is made that hand determination and a kind of finger are unknown.

The plain four-finger image determination device may further comprises a core positional relationship evaluation unit which makes the hand determination and determination of a kind of finger based on a relationship of heights of cores of the fingerprints in the respective fingers, a direction combination evaluation unit which determines a tendency of the ridge line direction for each of the fingerprints of the respective fingers to make the hand determination and determination of a kind of finger based on a combination of tendencies of the ridge line directions of the four fingers, and a hand determination and kind of finger determination unit which integrates predetermined confidences each indicative of probability of determination with the hand determination and determination of a kind of finger made based on the relationship of heights of cores of the fingerprints and the combination of tendencies of the ridge line directions as a determination result to make ultimate decision of the hand determination and determination of a kind of finger.

The invention further provides a plain four-finger image determination method according to the independent method claim 12.

Further, the invention provides a plain four-finger image determination program for controlling a computer according to the independent program claim 20.

Other objects, features and advantages of the present invention will become clear from the detailed description given herebelow.

## BRIEF DESCRIPTION OF THE DRAWINGS

The present invention will be understood more fully from the detailed description given herebelow and from the accompanying drawings of the preferred embodiment of the invention, which, however, should not be taken to be limitative to the invention, but are for explanation and understanding only.

In the drawings:

Fig. 1 is a block diagram showing a structure of a plain four-finger image determination device according to a preferred embodiment of the present invention;

Fig. 2 is a diagram showing one example of a plain four-finger image of four fingers read by a scanner or the like, whose hand is to be determined and whose kind of finger is to be determined by the plain four-finger image determination device of the present embodiment;

Fig. 3 is a diagram showing an example of fingerprint images of the four fingers cut out from the plain four-finger image shown in Fig. 2;

Fig. 4 is a flow chart for use in explaining contents of processing of determining hands and determining a kind of finger of a plain four-finger image by the plain four-finger image determination device according to the present embodiment;

Fig. 5 is a diagram showing a plain four-finger image obtained when the plain four-finger image illustrated in Fig. 2 is rolled clockwise such that each finger tip faces to the upper side of paper and a histogram obtained when the density of the image is accumulated vertically;

Fig. 6 is a flow chart showing one example of fingerprint image cutting out processing by a plain four-finger image cut-out unit;

Fig. 7 is a diagram showing 16 kinds of direction patterns which determine a direction of a ridge line;

Fig. 8 is a diagram showing a result of extraction of a direction of a ridge line from a fingerprint image of a right hand index finger shown in Fig. 3;

Fig. 9 is a flow chart for use in explaining contents of processing of determining hands and determining a kind of finger by a core positional relationship evaluation unit;

Fig. 10 is a flow chart for use in explaining contents of processing of determining hands and determining a kind of finger in a case where a cut out fingerprint is for three fingers;

Fig. 11 is a diagram showing one example of a positional relationship among cores extracted from a plain four-finger image according to the present embodiment;

Fig. 12 is a flow chart for use in explaining contents of processing of determining hands and determining a kind of finger by a direction combination evaluation unit;

Fig. 13 is a diagram showing examples of four patterns, a whorl pattern, an arch pattern, a left slanted loop pattern and a right slanted loop pattern;

Fig. 14 is a diagram showing examples of a fingerprint having a leftward-flowing tendency and a fingerprint having a rightward-flowing tendency with respect to a whorl pattern;

Fig. 15 is a diagram showing an example of a core of a fingerprint and a core lower region;

Fig. 16 is a flow chart for use in explaining contents of processing of deciding ultimate hand determination and kind of finger by a hand determination and kind of finger determination unit;

Fig. 17 is a diagram showing an example of a plain four-finger image impressed with a fingertip coming out of a scan region;

Fig. 18 is a diagram showing an example of a plain four-finger, image obtained by ordinarily scanning four fingers;

Fig. 19 is a diagram showing an example of a plain four-finger image obtained by scanning with a middle finger bent; and

Fig. 20 is a diagram showing an example of a plain four-finger image obtained by scanning with a middle finger and a ring finger bent.

## DESCRIPTION OF THE PREFERRED EMBODIMENT

In the following, a preferred embodiment of the present invention will be detailed with reference to the drawings.

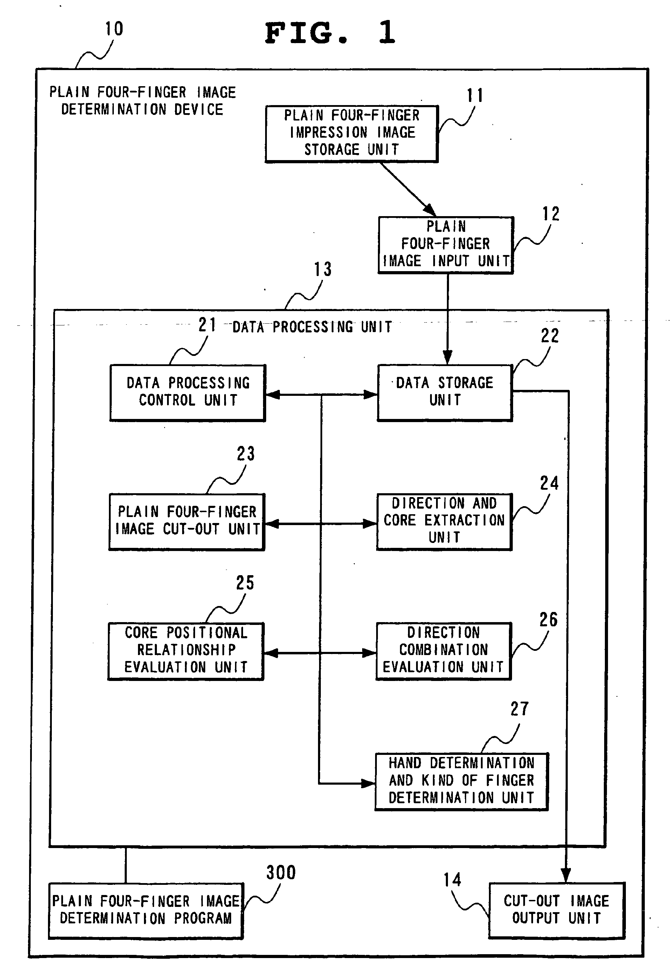

Fig. 1 is a block diagram showing a structure of a plain four-finger image determination device according to the preferred embodiment of the present invention.

With reference to Fig. 1, a plain four-finger image determination device 10 includes a plain four-finger image data storage unit 11, a plain four-finger image input unit 12, a data processing unit 13 and a cut-out image output unit 14.

The plain four-finger image data storage unit 11 is a storage means which stores a plain four-finger impression image as digitalized data of a plain four-finger impression image (representing an impression image of plain read four fingers) read by a sensor or an image scanner, which is realized, for example, by an external storage device such as an HDD. The image is a target image whose hand is to be determined and whose kind of finger is to be determined by the present device. In the following, a plain four-finger impression image will be referred to as a plain four-finger image.

The plain four-finger image input unit 12 has a function of receiving input of a plain four-finger image read by a sensor or an image scanner from the plain four-finger image data storage unit 11.

While illustrated in the present embodiment is an example, in which a plain four-finger image stored in the plain four-finger image data storage unit 11 is input by the plain four-finger image input unit 12, it is also possible to directly digitalize a plain four-finger image read by a sensor or an image scanner and input the digitalized data. In this case, the sensor or the image scanner is connected to the plain four-finger image input unit 12.

The data processing unit 13, which is realized by a program-controllable computer device (CPU), includes a data processing control unit 21, a data storage unit 22, a plain four-finger image cut-out unit 23, a direction and core extraction unit 24, a core positional relationship evaluation unit 25, a direction combination evaluation unit 26 and a hand determination and kind of finger determination unit 27.

The data processing unit 13 has an interface with the cut-out image output unit 14.

The cut-out image output unit 14 is a means for outputting a plurality of cut-out fingerprint images which are stored in the data storage unit 22 of the data processing unit 13, as well as information about hand determination and a kind of finger of each of the fingerprint images.

Here, cutting out represents dividing an input plain four-finger image into a plurality of fingerprint images of the respective kinds of fingers (four fingers).

Next, description will be made of a function of each component of the above-described data processing unit 13.

The data processing control unit 21 has a function of controlling (program control) other components forming the data processing unit 13, as well as controlling an interface with an external element.

The data storage unit 22 stores a plain four-finger image, image data corresponding to fingerprints of four fingers cut out from the image, direction data and core data of each fingerprint and the like. The data storage unit 22 is realized, for example, by a recording medium such as a magnetic disk or a semiconductor memory.

The plain four-finger image cut-out unit 23 has a function of cutting out a fingerprint image of each kind of finger (four fingers) to generate a plurality of fingerprint images corresponding to the respective fingers.

The direction and core extraction unit 24 has a function of extracting a direction of a ridge line and a core of a fingerprint from a fingerprint image generated by cut-out by the plain four-finger image cut-out unit 23.

The core positional relationship evaluation unit 25 has a function of putting probability of hand determination and determination of a kind of finger of each fingerprint image into numerals as confidence by evaluating a relationship among core positions of the respective fingerprints from cut-out position information and fingerprint core positional information of a generated fingerprint image.

The direction combination evaluation unit 26 has a function of putting probability of hand determination and determination of a kind of finger of each fingerprint image into numerals as confidence by determining a direction tendency of a fingerprint from a direction of a small region below a core of a generated fingerprint image to evaluate a combination of the direction tendencies of the respective fingers.

The hand determination and kind of finger determination unit 27 has a function of ultimately determining hands and determining a kind of finger by using confidence of hand determination and a kind of finger output from the core positional relationship evaluation unit 25 and confidence of hand determination and determination of a kind of finger output from the direction combination evaluation unit 26.

Next, operation of the plain four-finger image determination device 10 according to the present embodiment will be described in detail with reference to the drawings.

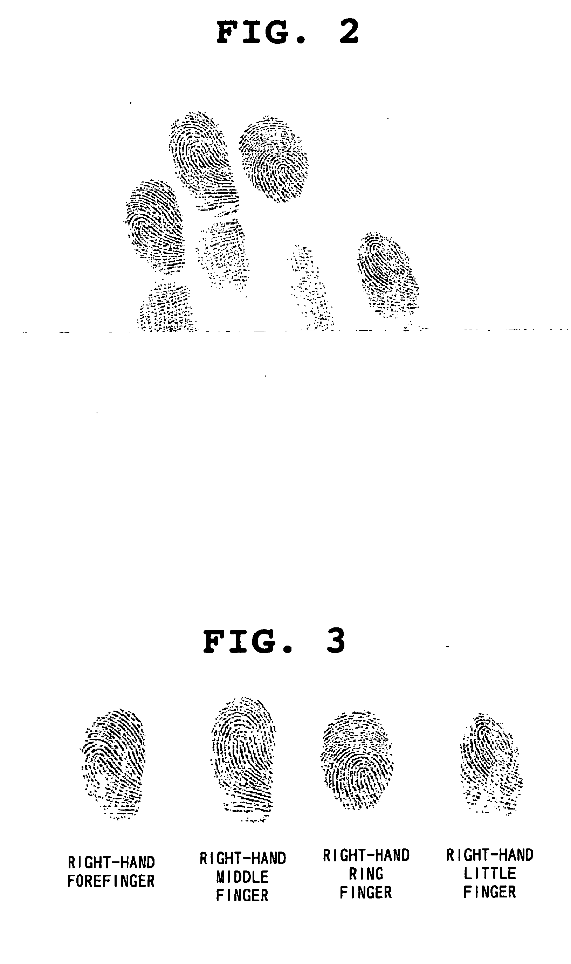

Fig. 2 shows one example of a plain four-finger image of four fingers read by a scanner or the like, whose hand is to be determined and whose kind of finger is to be determined by the plain four-finger image determination device 10 according to the present embodiment. As shown in the figure, the plain four-finger image is an image obtained by scanning four fingers, a forefinger, a middle finger, a ring finger and a little finger, at once. Here, the forefinger, the middle finger, the ring finger and the little finger represent an index finger, a middle finger, a ring finger and a little finger.

Fig. 3 shows examples of fingerprint images of four fingers cut out from the plain four-finger image illustrated in Fig. 2. Illustrated here are fingerprint images of four fingers cut out from the plain four-finger image and their corresponding information about hand determination and a kind of finger.

The plain four-finger image and the fingerprint images shown here are digitalized with a resolution of 500dpi according to ANSI/NIST-CSL-1-1993 Data Format for the Interchange of Fingerprint, Facial & SMT Information, which is standardized by the National Institute of Standards and Technology of the U.S.

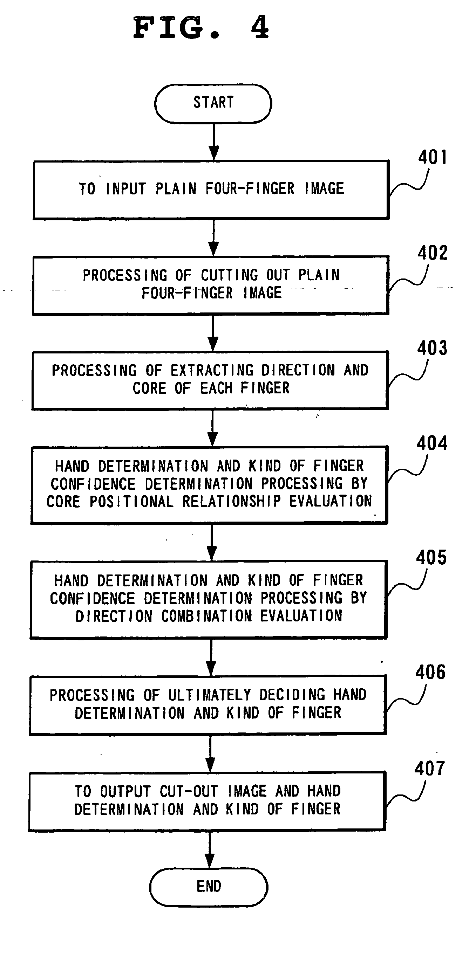

Fig. 4 is a flow chart for use in explaining the contents of processing of determining hands and determining a kind of finger of a plain four-finger image executed by the plain four-finger image determination device 10 according to the present embodiment. In the following, the description will be made according to the flow chart of Fig. 4.

First, a plain four-finger image is input by the plain four-finger image input unit 12 and transmitted to the data processing unit 13 (Step 401). As described above, the plain four-finger image input unit 12 is capable of inputting such a plain four-finger image as illustrated in Fig. 2 which is already stored in the plain four-finger image data storage unit 11 or directly digitalizing and inputting an image read by a plain four-finger scanner or the like.

The received plain four-finger image is temporarily stored in the data storage unit 22 under the control of the data processing control unit 21.

Next, the data processing control unit 21 reads the plain four-finger image as a target of determination which is stored in the data storage unit 22 and transmits the image to the plain four-finger image cut-out unit 23. The plain four-finger image cut-out unit 23 executes processing of cutting out a fingerprint image of four fingers on a finger basis from the received plain four-finger image (Step 402).

One example of fingerprint image cut-out processing by the plain four-finger image cut-out unit 23 will be described in the following.

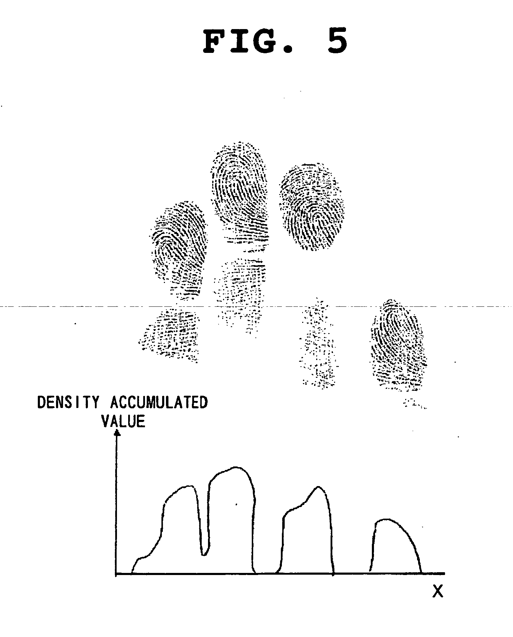

Fig. 5 shows a plain four-finger image shown in Fig. 2 rotated by 20 degrees clockwise (right-handed rotation) such that a tip of each finger faces upwards on the paper and a histogram obtained when the density of the image is accumulated vertically. The abscissa indicates a horizontal position.

With reference to Fig. 5, with respect to a plain four-finger image with each finger impressed approximately upwards, a density accumulated value in the horizontal direction becomes largest in the vicinity of the center of each finger and smallest between fingers. As a result, when a horizontal distribution of density accumulated values is checked to find four convex peaks (maximal values) appearing, the positions of the four convex peaks are considered to correspond to the respective fingers. When a concave peak whose density accumulated value is the smallest (minimal value) (or a region where a density is null) is detected between convex peaks, the position can be considered as a boundary for cutting out a fingerprint image of the four fingers (cut-out position).

While in the example shown in Fig. 5, the description has been made of a plain four-finger image in which each finger is impressed approximately upwards (vertical direction), cut-out position can be detected similarly to the above-described case from a plain four-finger image in which each finger is impressed laterally (horizontally) by checking a vertical distribution of density accumulated values in the horizontal direction.

On the other hand, in an ordinary plain four-finger image, a tip of each finger is not always impressed upwards and the image is in many cases impressed with each finger inclining vertically. For cutting out a fingerprint image from a plain four-finger image at such a state, it is first necessary to detect a rotation angle for making a finger face either a vertical direction or a horizontal direction.

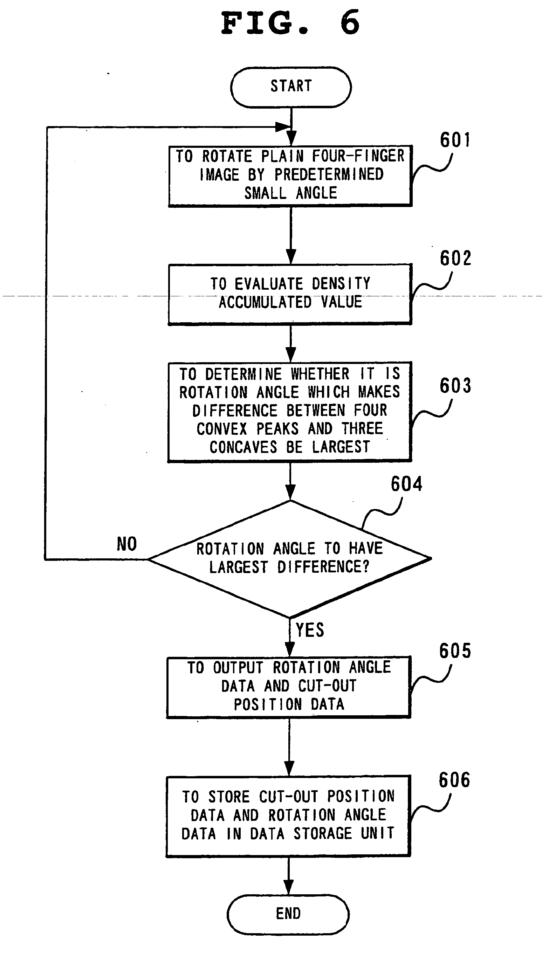

In the following, description will be made of one example of processing of detecting a cut-out position and detecting a rotation angle in the fingerprint image cut-out processing by the plain four-finger image cut-out unit 23 (Step 402) with reference to the flow chart shown in Fig. 6.

First, execute evaluation using the above-described distribution of density accumulated values (Step 602) while rotating a received plain four-finger image by a predetermined small angle (e.g. on a 5-degree basis) (Step 601).

Repeat the processing of Steps 601 and 602 until a rotation angle which makes a difference between four convex peaks corresponding to the four fingers in the distribution of the density accumulated values and three concave peaks between the four fingers be the largest (Steps 603 and 604).

Then, output the positions of the four convex peaks and three concave peaks between the four fingers as cut-out position data and a detected rotation angle as rotation angle data (Step 605).

Since a positional relationship between the cut-out image and the original plain four-finger image is necessary for the processing to follow, such cut-out position data indicative of a position of the cut-out image as shown above is output at the same time.

The cut-out fingerprint image of each finger is stored in the data storage unit 22 by the data processing control unit 21 together with the cut-out position data and the rotation angle of the cut-out image (Step 606).

Next, with respect to the cut-out fingerprint image of each finger, execute processing of extracting a direction of a ridge line of the fingerprint and extracting a core (Step 403).

In the direction extraction and core extraction processing (Step 403), the data processing control unit 21 reads a fingerprint image of a relevant finger one finger by one finger from the data storage unit 22 to transmit the image to the direction and core extraction unit 24.

The direction and core extraction unit 24 extracts a direction of a ridge line from the received fingerprint image on a small region basis. The direction and core extraction unit 24 extracts a core from the extracted direction data.

Direction of a ridge line of a fingerprint is automatically extracted by a conventional technique, for example, by the technique disclosed in Japanese Patent Publication (Kokoku) No. Showa 59-27945 (Patent Literature 3). More specifically, making use of the fact that a direction of stripes in a certain pixel of a striped pattern image has its density vary little in a direction parallel to the stripes and vary largely in a direction orthogonal to the stripes, obtain an extreme value of the amount of variation of a density in a plurality of predetermined quantization directions to determine a direction of the stripes from the extreme value.

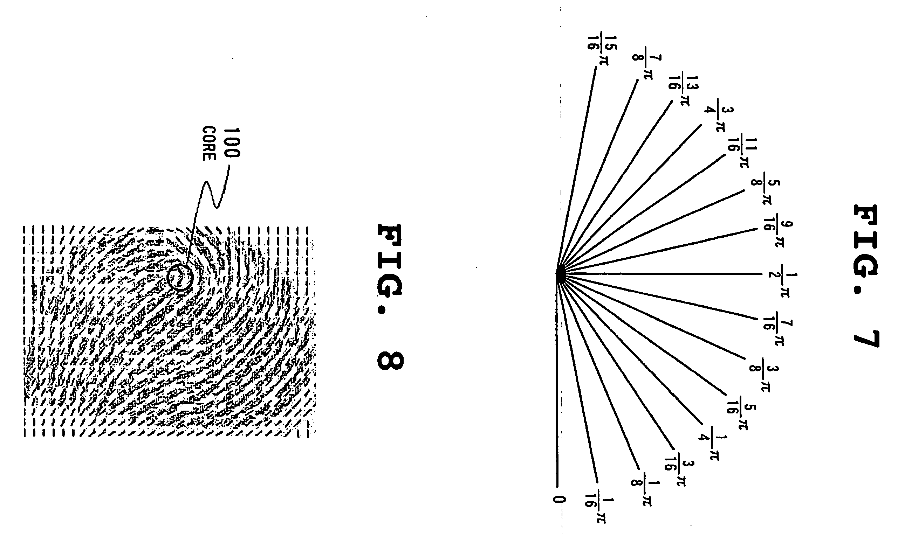

Fig. 8 shows one example of direction extraction according to the present embodiment. Fig. 8 illustrates a result of extraction of a ridge line direction by the method disclosed in Japanese Patent Publication (Kokoku) No. Showa 59-27945 (Patent Literature 3) with respect to the fingerprint image of an index finger (forefinger) shown in Fig. 3. In the example shown in Fig. 8, in a small region of 16 pixels x 16 pixels on the fingerprint image, a ridge line direction is determined based on such 16 kinds of direction patterns as shown in Fig. 7 to extract direction data.

Automatic extraction of the core of a fingerprint can be realized by such conventional techniques as recited in, for example, Japanese Patent No. 2690103 (Patent Literature 2), entitled "DETECTING SYSTEM FOR CENTER OF FINGERPRINT", Japanese Patent No. 2637764 (Patent Literature 4), entitled "DETECTING SYSTEM FOR CENTER OF FINGERPRINT" and their corresponding USP 5,040,224, entitled "Fingerprint Processing System Capable of Detecting a Core of a Fingerprint Image by Statistically Processing Parameters" (Patent Literature 5).

The method, for example, recited in Japanese Patent No. 2690103 (Patent Literature 2) is a method of determining a core of a fingerprint, in which an upward curvature in the vicinity of the apex of a ridge line having a convex configuration which faces the direction of a tip of a finger (up) is measured in the direction of a base of the finger with respect to each ridge line. At this time, check a change of a curvature of a ridge line from the tip of the finger toward the direction of the base to consider a position in the vicinity of the apex of the ridge line immediately before exceeding the largest curvature expected as a core of the fingerprint.

According to the method in Patent Literature 2, in addition to fingerprints having an ungulate pattern and a whorl pattern, it is possible to determine a core of a fingerprint having an arch pattern. The method also enables an unclear fingerprint image to be coped with.

With reference to Fig. 8, illustrated in a small circle in the figure is a position of a core extracted by the methods disclosed in Japanese Patent No. 2690103 (Patent Literature 2) and Japanese Patent No. 2637764 (Patent Literature 4) from the fingerprint image of the right-hand index finger shown in Fig. 3.

Thus extracted direction data and core data are stored in the data storage unit 22 by the data processing control unit 21. The direction extraction processing and the core extraction processing will be repeated as many times as the number of cut out fingerprint images (ordinarily 4 times).

Next, hand determination and kind of finger determination processing is executed by the core positional relationship evaluation unit 25 (Step 404).

In the hand determination and kind of finger determination processing by the core positional relationship evaluation unit 25 (Step 404), the data processing control unit 21 reads a rotation angle of a plain four-finger image, each fingerprint image cut-out position data and core data stored in the data storage unit 22 to transmit the read data to the core positional relationship evaluation unit 25.

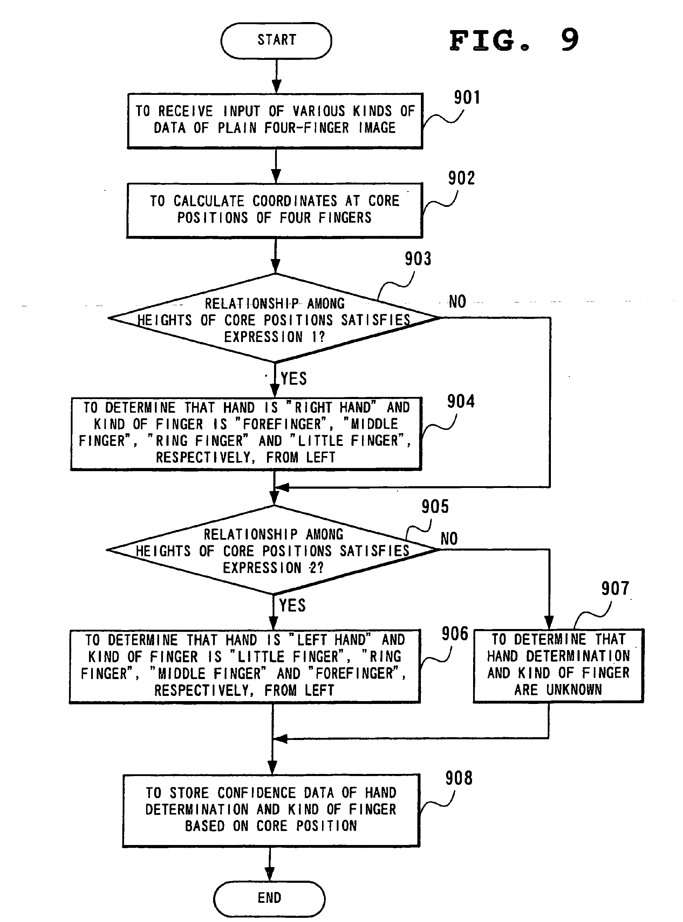

In the following, the contents of the hand determination and kind of finger determination processing by the core positional relationship evaluation unit 25 will be described with reference to the flow chart shown in Fig. 9.

The core positional relationship evaluation unit 25 receives input of a rotation angle of a plain four-finger image, and cut-out position data and core data of each fingerprint image sent by the data processing control unit 21 (Step 901).

The core positional relationship evaluation unit 25 calculates a positional relationship of a core corresponding to each fingerprint from the rotation angle of the plain four-finger image, and the cut-out position data and the core data to determine hands and determine a kind of finger based on the positional relationship.

First, for the purpose of facilitating evaluation of a core positional relationship, with the down left (down-left corner) of the plain four-finger image as an origin and a direction of a fingertip of the plain four-finger image (the direction of the rotation angle detected at Step 402) as a Y axis direction, define a cartesian coordinate system with a direction orthogonal to the Y axis as an X direction to calculate coordinates of a core of each finger on the cartesian coordinates (Step 902). The calculation of coordinates of a core of each finger can be made by simple rotation and parallel displacement.

Define thus calculated core coordinates of each finger as (X1, Y1), (X2, Y2), (X3, Y3) and (X4, Y4), respectively, from left of the plain four-finger image.

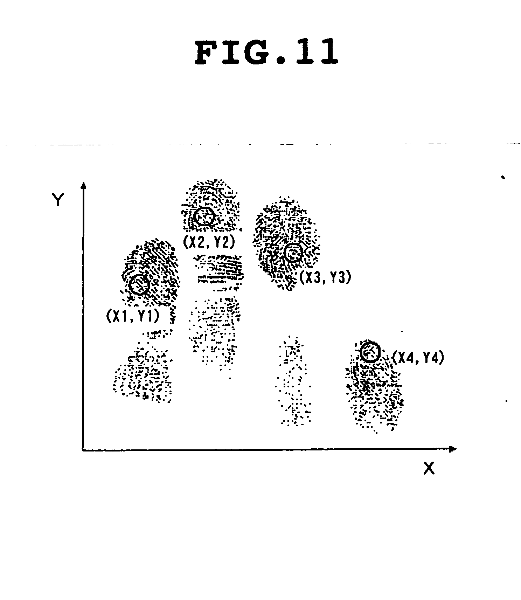

Fig. 11 is a diagram showing one example of a positional relationship of a core extracted from a plain four-finger image according to the present embodiment. Shown in Fig. 11 is a position of a core of each finger in the rotated plain four-finger image illustrated in Fig. 5.

In general, in a case of a plain four-finger image of right-hand four fingers, a relationship among heights of cores of the respective fingers (positions in the Y axis direction) satisfies the following relationship as Expression 1.

$$Y2 > Y3 > Y1 > Y4 \quad \cdots \text{Expression 1}$$

It can been seen, for example, that in the example shown in Fig. 11, the relationship in Expression 1 holds.

In addition, in a case of a plain four-finger image of left-hand four fingers, in general, a relationship among heights of core positions (positions in the Y axis direction) is symmetric to the case of a plain four-finger image of right-hand four fingers to satisfy the following relationship as Expression 2.

$$Y3 > Y2 > Y4 > Y1 \quad \cdots \text{Expression 2}$$

There is no chance of Expression 1 and Expression 2 holding simultaneously. Accordingly, when the core positional relationship among four fingers satisfies Expression 1, the hand is presumed to be a right hand and a kind of finger is presumed to be a forefinger, a middle finger, a ring finger and a little finger, respectively, from left, while when the relationship satisfies Expression 2, the hand is presumed to be a left hand and a kind of finger is presumed to be a little finger, a ring finger, a middle finger and a forefinger, respectively, from left.

The core positional relationship evaluation unit 25 determines whether a relationship among heights of core positions of the four fingers satisfies Expression 1 or not (Step 903) and when Expression 1 is satisfied, verifies that the hand is a "right hand" and a kind of finger is a "forefinger", a "middle finger", a "ring finger" and a "little finger", respectively, from left (Step 904).

Unless Expression 1 is satisfied at Step 903, determine whether a relationship among heights of core positions of the four fingers satisfies Expression 2 or not (Step 905) and when Expression 2 is satisfied, determine that the hand is a "left hand" and a kind of finger is a "little finger", a "ring finger", a "middle finger" and a "forefinger", respectively, from left (Step 906).

Although thus obtained hand determination and kind of finger determination are presumed to be precise with high probability, it is hard to say that the confidence (probability of being precise) of hand determination and kind of finger determination is 100%, taking a possibility of a person to be examined entering his/her finger bent with malicious intentions into consideration. Here, set 80% of confidence (probability of being precise) to the above-described result of hand determination and determination of a kind of finger in the present embodiment.

When neither the relationship in Expression 1 nor the relationship in Expression 2 is satisfied, determination is made that hand determination and a kind of finger are unknown (Step 907).

The core positional relationship evaluation unit 25 outputs thus obtained result of the hand determination and the determination of a kind of finger as confidence data of hand determination and a kind of finger based on the core positional relationship (data including the result of the hand determination and the determination of a kind of finger and confidence), which confidence data is temporarily stored in the data storage unit 22 by the data processing control unit 21 (Step 906).

Assuming an exceptional case, a fingerprint image cut out from a plain four-finger image is not always for four fingers. Assuming, for example, that a cut out fingerprint is for three fingers, a forefinger, a middle finger and a ring finger, in a case of a right hand, a relationship in Expression 3 will be satisfied.

$$Y2 > Y3 > Y1 \quad \cdots \text{Expression 3}$$

In a case of a ring finger, a middle finger and a forefinger of a left hand, a relationship in Expression 4 will be satisfied.

$$Y2 > Y1 > Y3 \quad \cdots \text{Expression 4}$$

Assuming that the three fingers are a middle finger, a ring finger and a little finger, in a case of a right hand, a relationship in Expression 5 will be satisfied.

$$Y1>Y2>Y3 \quad \cdots \text{Expression 5}$$

In a case of a ring finger, a middle finger and a forefinger of a left hand, a relationship in Expression 6 will be satisfied.

$$Y3>Y2>Y1 \quad \cdots \text{Expression 6}$$

Here, since there exists no combination which simultaneously satisfies Expressions 3, 4, 5 and 6, if any of the Expressions is satisfied, hand determination and determination of a kind of finger can be made with some extent of confidence.

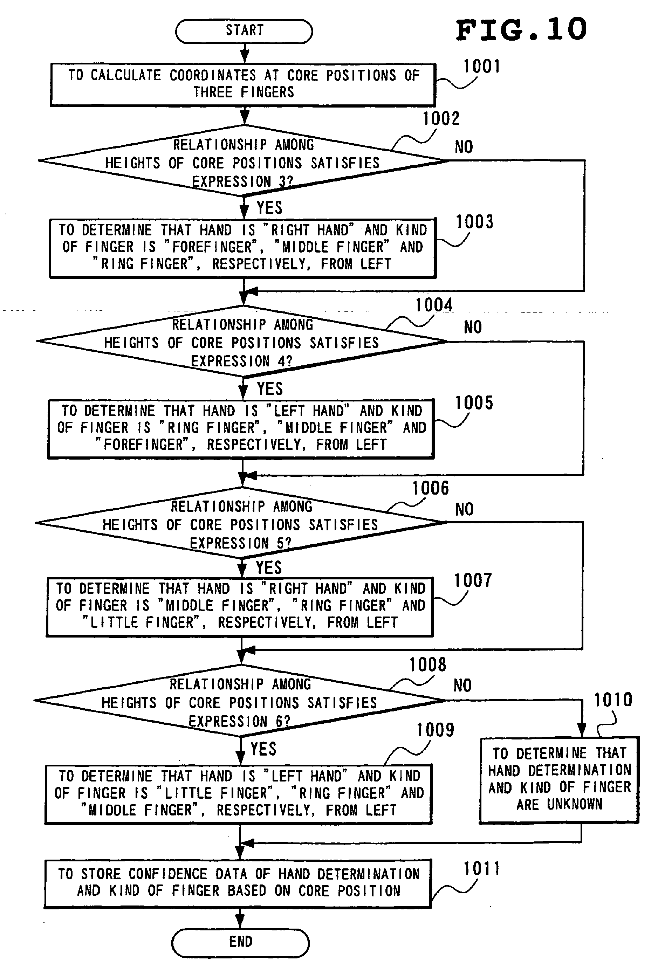

Assume that when a cut-out fingerprint is for three fingers and cut-out position data for the three fingers is applied, the core positional relationship evaluation unit 25 makes hand determination and determination of a kind of finger according to the processing shown in the flow chart of Fig. 10.

More specifically, by the same processing as that of Step 902, calculate coordinates of core positions of the three fingers (Step 1001) to determine whether the calculated relationship among heights of core positions of the three fingers satisfies the relationship in Expression 3 (Step 1002) and when Expression 3 is satisfied, determine that the hand is a "right hand" and a kind of finger is a "forefinger", a "middle finger" and a "ring finger", respectively, from left (Step 1003).

Unless Expression 3 is satisfied, determine whether the relationship among heights of the core positions of the three fingers satisfies the relationship in Expression 4 or not (Step 1004) and when Expression 4 is satisfied, determine that the hand is a "left hand" and a kind of finger is a "ring finger", a "middle finger" and a "forefinger", respectively, from left (Step 1005).

Unless Expression 4 is satisfied, determine whether the relationship among heights of the core positions of the three fingers satisfies the relationship in Expression 5 or not (Step 1006) and when Expression 5 is satisfied, determine that the hand is a "right hand" and a kind of finger is a "middle finger", a "ring finger" and a "little finger", respectively, from left (Step 1007).

Unless Expression 5 is satisfied, determine whether the relationship among heights of the core positions of the three fingers satisfies the relationship in Expression 6 or not (Step 1008) and when Expression 6 is satisfied, determine that the hand is a "left hand" and a kind of finger is a "little finger", a "ring finger" and a "middle finger", respectively, from left (Step 1009).

When no relationship in Expressions 3 through 6 is satisfied, determination is made that the hand determination and determination of a kind of finger are unknown (Step 1010).

Taking into consideration a possibility that a person to be examined will input a plain four-finger image with his/her finger bent by malicious intentions or an error of a positional relationship among three fingers, it is impossible to set its confidence to be as high as that of the determination result by Expression 1 or Expression 2. In the present embodiment, set 50 % of confidence to a result of hand determination and determination of a kind of finger obtained by Expressions 3 through 6.

The core positional relationship evaluation unit 25 outputs thus obtained result of the hand determination and the determination of a kind of finger as confidence data of hand determination and a kind of finger based on the core positional relationship (data including the result of hand determination and determination of a kind of finger and confidence), which confidence data is temporarily stored in the data storage unit 22 by the data processing control unit 21 (Step 1011).

Next, processing of determination between hands and determination of a kind of finger by direction combination evaluation is executed (Step 405).

In the processing of hand determination and determination of a kind of finger by direction combination evaluation (Step 405), the data processing control unit 21 reads, from the data storage unit 22, the direction data and the core data of each fingerprint image stored by the processing at Step 3 and transmits the data to the direction combination evaluation unit 26.

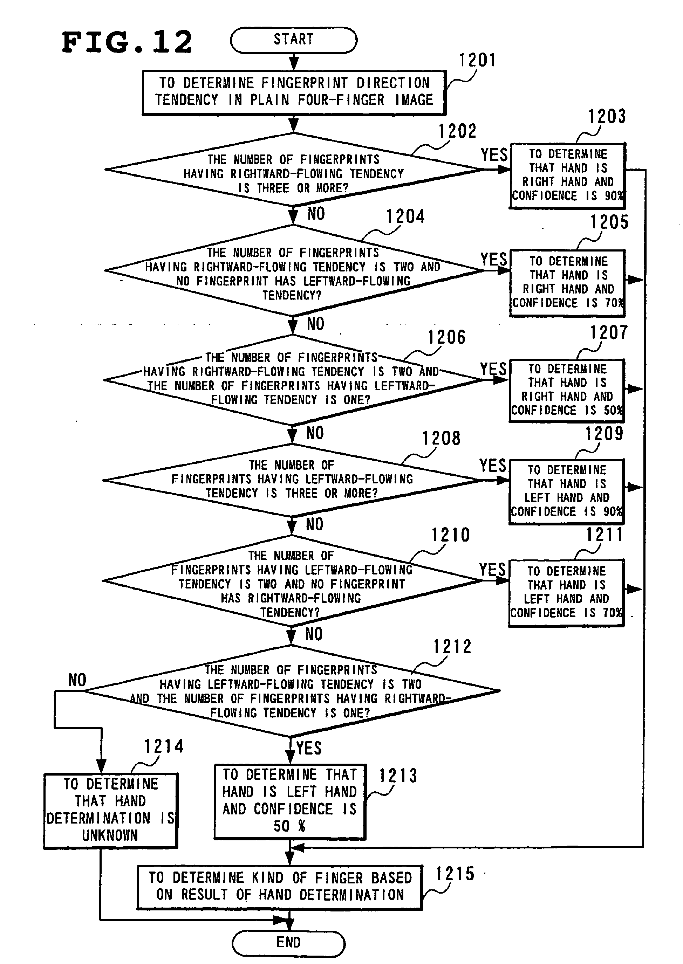

In the following, the contents of the hand determination and kind of finger determination processing by the direction combination evaluation unit 26 will be described with reference to the flow chart shown in Fig. 12.

The direction combination evaluation unit 26 first extracts a tendency of a direction of a relevant fingerprint from direction data of a part below a core of each finger. Next, by using a combination of tendencies of directions of the respective fingers, determine confidence of hand determination and determination of a kind of finger.

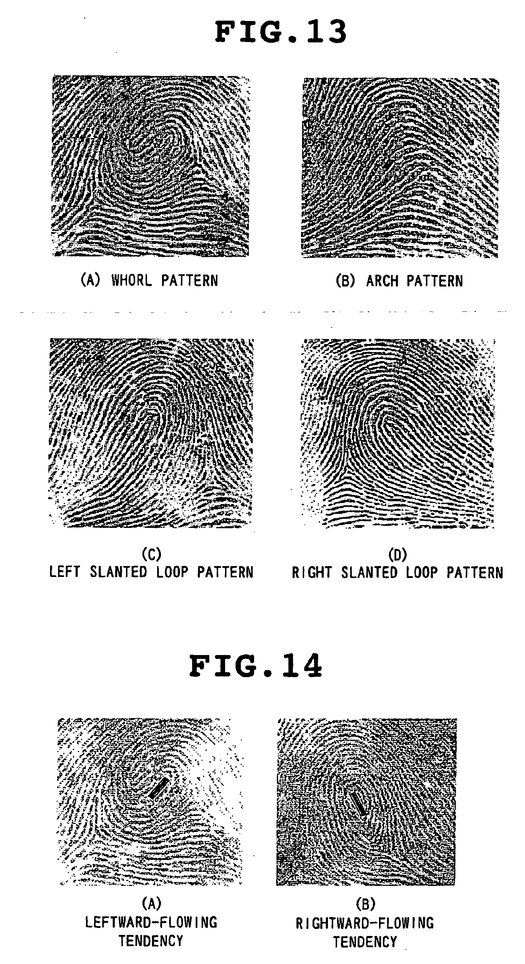

First, prior to description related to a direction tendency, a pattern of a fingerprint will be described. Patterns are roughly classified into four, a whorl pattern, an arch pattern, a left slanted loop pattern and a right slanted loop pattern. Examples of the four patterns (A) whorl pattern, (B) arch pattern, (C) left slanted loop pattern and (D) right slanted loop pattern are shown in Fig. 13. Among these, (C) left slanted loop pattern and (D) right slanted loop pattern are known to be strongly correlated with a right hand or a left hand and a kind of finger. For example, many of right hands have a right slanted loop pattern and many of left hands have a left slanted loop pattern.

The inventor of the present invention examined (A) whorl pattern which occupies about 30 % of the entire patterns to see whether there exists a ridge line tendency similar to that of an ungulate pattern and found that, limited to a narrow region below a core, many of ridge lines flow rightward on a right hand and many of ridge lines flow leftward on a left hand similarly to an ungulate pattern.

Therefore, not limited to an ungulate pattern, also with respect to a whorl pattern, define a fingerprint in which ridge lines in a part below a core flow leftward as a fingerprint having a leftward-flowing tendency and define a fingerprint in which ridge lines in a part below a core flow rightward as a fingerprint having a rightward-flowing tendency. Fig. 14 shows an example of a fingerprint having (A) leftward-flowing tendency and a fingerprint having (B) rightward-flowing tendency with respect to a whorl pattern.

In the present embodiment, the size (area) of a region below a core of each fingerprint image is defined as a region having 96 pixels laterally and 48 pixels vertically including 48 pixels arranged right and left centered around the core and 48 pixels arranged below the core. As to the size (area) of a region below the core of each fingerprint image, it can be arbitrarily changed without being limited by the above-descried number of pixels.

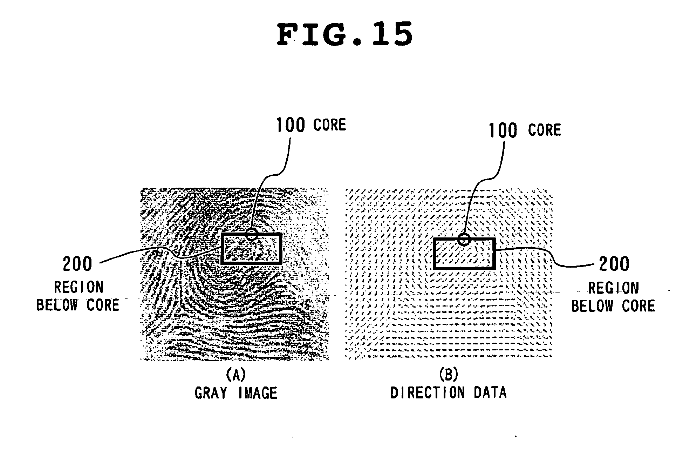

In Fig. 15, a circle represents a core 100 and a rectangular frame represents a region 200 below the core.

In Fig. 12, the direction combination evaluation unit 26 first determines a direction tendency of a ridge line in the above-described region 200 below the core (Step 1201).

In this determination of a direction tendency, a representative direction of ridge lines in a small area (16 x 16 pixels) in the region 200 below the core is considered as a direction tendency. As to a ridge line direction in the small area of 16 x 16 pixels, a direction of a ridge line extracted by the processing at Step 403 may be used.

In the present embodiment, the ridge line directions in the respective small regions are put into vectors and a direction of a composite vector of all the vectors is defined as a representative direction. It is apparent that an average of the directions of all the vectors may be calculated to consider the average direction as a representative direction.

In the determination of a direction tendency by the direction combination evaluation unit 26, when a representative direction inclines by 10 degrees or more from right above toward lower left, determination is made that it has a leftward-flowing tendency and when the direction inclines by 10 degrees or more from right above toward lower right, determination is made that it has a rightward-flowing tendency. In a case where an inclination of a representative direction is less than 10 degrees toward lower left and less than 10 degrees toward lower right, a rightward or leftward-flowing tendency is considered unknown because making determination whether the direction inclines leftward or rightward is difficult.

Next, description will be made of the contents of processing of determining hands and determining a kind of finger by a combination of direction tendencies of fingerprints of the respective fingers by the direction combination evaluation unit 26.

Fingerprints whose ridge line direction tendency can be determined include three patterns, a whorl pattern, a left slanted loop pattern and a right slanted loop pattern which totally occupy 90 % or more of all the patterns. Accordingly, finding a direction tendency of these three patterns increases a possibility of determining between hands.

Examination of fingerprint 1350 cards in "Fingerprint Data Base NIST Special Data Base 14" made public by the National Institute of Standards and Technology of the U.S. obtained the following statistical result.

(1) Right-hand four fingers all have a leftward-flowing tendency: 0%
(2) Three among four right-hand fingers have a leftward-flowing tendency: 0.1%
(3) Two among four right-hand fingers have a leftward-flowing tendency: 0.8%
(4) Left-hand four fingers all have a rightward-flowing tendency: 0%
(5) Three among four left-hand fingers have a rightward-flowing tendency: 0.1%
(6) Two among four left-hand fingers have a rightward-flowing tendency: 1.1%

Conversely speaking, it can be determined, even if whether it is a right hand or left is unknown, when fingerprints of three or more fingers have a rightward-flowing tendency, that the hand of its plain four-finger image is a right hand and when fingerprints of three or more fingers have a leftward-flowing tendency, determined that the hand of its plain four-finger image is a left hand. In addition, even with two fingers, a hand of its image can be presumed with a probability high to some extent.

Taking a possibility of a direction tendency extraction error into consideration, the direction combination evaluation unit 26 of the present embodiment determines confidence in the processing of determining between hands based on a direction tendency by the following method.

(1) When fingerprints of three or more fingers have a rightward-flowing tendency (Step 1202), determine that the hand is a "right hand" and confidence is 90 % (Step 1203).

(2) When two fingerprints have a rightward-flowing tendency and no fingerprint has a leftward-flowing tendency (Step 1204), determine that the hand is a "right hand" and confidence is 70 % (Step 1205).

(3) When two fingerprints have a rightward-flowing tendency and one fingerprint has a leftward-flowing tendency (Step 1206), determine that the hand is a "right hand" and confidence is 50 % (Step 1207).

(4) When three or more fingerprints have a leftward-flowing tendency (Step 1208), determine that the hand is a "left hand" and confidence is 90 % (Step 1209).

(5) When two fingerprints have a leftward-flowing tendency and no fingerprint has a rightward-flowing tendency (Step 1210), determine that the hand is a "left hand" and confidence is 70 % (Step 1211).

(6) When two fingerprints have a leftward-flowing tendency and one fingerprint has a rightward-flowing tendency (Step 1212), determine that the hand is a "left hand" and confidence is 50 % (Step 1213).

In a case of other combination of direction tendencies of four fingers than the above-described combinations, determine that hand determination is unknown (Step 1214).

When hand determination is made in a case where the number of cut-out fingers is four, a kind of finger can be determined with ease as described at Step 404. More specifically, when the hand is a "right hand", the direction combination evaluation unit 26 determines that a kind of finger is a "forefinger", a "middle finger", a "ring finger" and a "little finger" from left and when the hand is a "left hand", determine that a kind of finger is a "little finger", a "ring finger", a "middle finger" and a "forefinger" from left (Step 1215).

In a case where the number of cut-out fingers is three, however, even if hand determination can be made, a kind of finger can not be determined with such ease as described above. In this case, using only confidence of hand determination, for a kind of finger, confidence calculated at Step 404 will be used.

Thus obtained results of hand determination and determination of a kind of finger are output as confidence data of hand determination and a kind of finger based on a direction tendency (data including results of hand determination and determination of a kind of finger and confidence), which confidence data of hand determination and a kind of finger based on a direction tendency is temporarily stored in the data storage unit 22 by the data processing control unit 21 (Step 1216).

Next, processing of deciding ultimate hand determination and kind of finger by the hand determination and kind of finger determination unit 27 is executed (Step 406).

In the ultimate hand determination and kind of finger deciding processing (Step 406), the data processing control unit 21 reads confidence data of hand determination and a kind of finger based on a core positional relationship and confidence data of hand determination and a kind of finger based on a direction tendency from the data storage unit 22 to transmit the data to the hand determination and kind of finger determination unit 27.

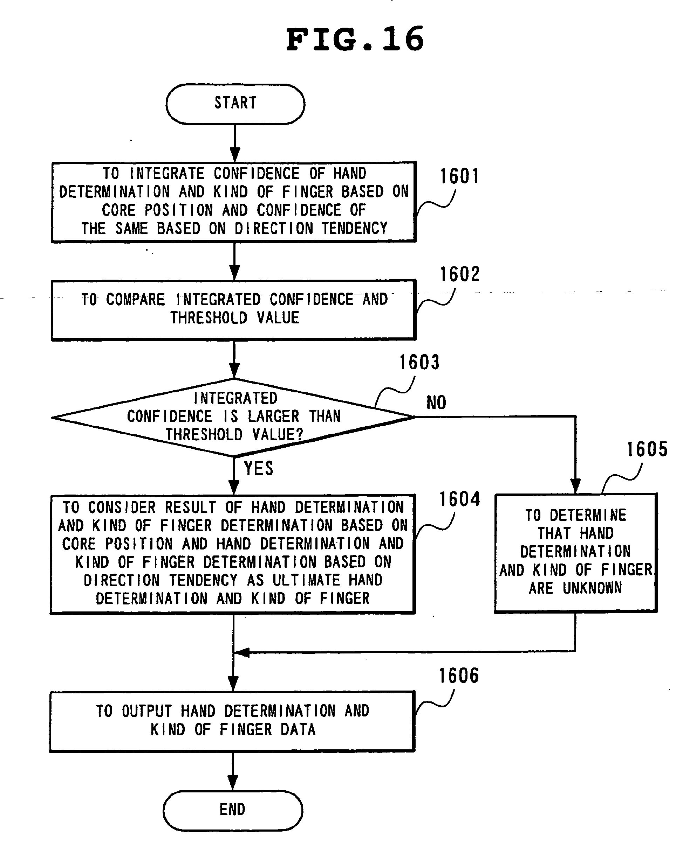

In the following, description will be made of the contents of processing of deciding ultimate hand determination and kind of finger by the hand determination and kind of finger determination unit 27 with reference to the flow chart shown in Fig. 16.

The hand determination and kind of finger determination unit 27 integrates the above two confidences (Step 1601). Then, decide ultimate hand determination and a kind of finger based on the integrated result of the confidences.

As a method of merging confidence of hand determination and a kind of finger based on a core positional relationship and confidence of hand determination and a kind of finger based on a direction tendency, a method using a geometrical mean, a method using an arithmetical mean or the like can be employed.

In the present embodiment, integrate of two confidences is executed by a method using an arithmetical mean. In a case where an arithmetical mean is used, when one of the confidences can not be obtained (hand determination and determination of a kind of finger are unknown), calculation will be simple because the confidence can be handled as "0".

In a case where an arithmetical mean is used, for example, when confidence of hand determination and a kind of finger based on a core positional relationship is 80 % (the hand is a "right hand" and a kind of finger is a "forefinger", a "middle finger", a "ring finger" and a "little finger", respectively, from left) and confidence of hand determination and a kind of finger based on a direction tendency is 70 % (the hand is a "right hand" and a kind of finger is a "forefinger", a "middle finger", a "ring finger" and a "little finger", respectively from left), the hand determination and kind of finger determination unit 27 obtains confidence of 75 % by merging confidences by the calculation of (80+70)/2.

Then, compare the confidence obtained by the integrate and a predetermined threshold value (Step 1602) to decide, when the confidence exceeds a threshold value (or it is equal or more than the threshold value) (Step 1603), a result of the hand determination and kind of finger determination indicated by the confidence data of the hand determination and a kind of finger based on a core positional relationship and that of the hand determination and a kind of finger based on a direction tendency as contents of the ultimate hand determination and kind of finger (Step 1604) to output the hand determination and kind of finger data representing the contents (Step 1606).

When the confidence obtained by the integrate is not more than the threshold value (or less than the threshold value)(Step 1603), the result of hand determination and kind of finger determination indicated by the confidence data of hand determination and a kind of finger based on a core positional relationship and that of hand determination and a kind of finger based on a direction tendency will not be adopted to decide that hand determination and a kind of finger are unknown (Step 1605) and output hand determination and kind of finger data indicative of the contents (Step 1606).

In a case where a preset threshold value is 70 %, since in the above example, confidence obtained by the integrate is 75 % which exceeds the threshold value, the hand determination and kind of finger determination unit 27 outputs, as a result of ultimate hand determination and kind of finger determination, the hand determination and kind of finger data indicating that the hand is a "right hand" and a kind of finger is a "forefinger", a "middle finger", a "ring finger" and a "little finger", respectively, from left.

On the other hand, when confidence of hand determination and a kind of finger based on a core positional relationship is 80 % (the hand is a "right hand" and a kind of finger is a "forefinger", a "middle finger", a "ring finger" and a "little finger", respectively, from left) and confidence of hand determination and a kind of finger based on a direction tendency is 50 % (the hand is a "right hand" and a kind of finger is a "forefinger", a "middle finger", a "ring finger" and a "little finger", respectively, from left), the hand determination and kind of finger determination unit 27 integrates confidences by the calculation of (80+50)/2 to obtain confidence of 65 %.

In this case, because the confidence by the integrate is not more than the threshold value (70 %), the hand determination and kind of finger determination unit 27 outputs hand determination and kind of finger data indicating that hand determination and a kind of finger are unknown as an ultimate hand determination and kind of finger determination result.

The ultimately determined hand determination and kind of finger data is temporarily stored in the data storage unit 22 by the data control unit 21.

When the hand determination and determination of a kind of finger are ultimately made to store the hand determination and kind of finger data in the data storage unit 22, the data processing control unit 21 takes out relevant cut-out image and hand determination and kind of finger determination result to transmit the same to the cut-out image output unit 14 (Step 407).

The cut-out image output unit 14 outputs the cut-out image and the hand determination and kind of finger determination result to a subsequent function (e.g. fingerprint collation device or the like) to end a series of processing.

By automatically determining a hand and determining a kind of finger of a plain four-finger image, the plain four-finger image determination device according to the present embodiment enables, even when a person to be examined impresses plain four fingers of a different hand with malicious intentions, detection of input with malicious intentions and enables accurate hand determination and determination of a kind of finger. As a result, expected is increase in a possibility of collating a person to be examined with malicious intentions.

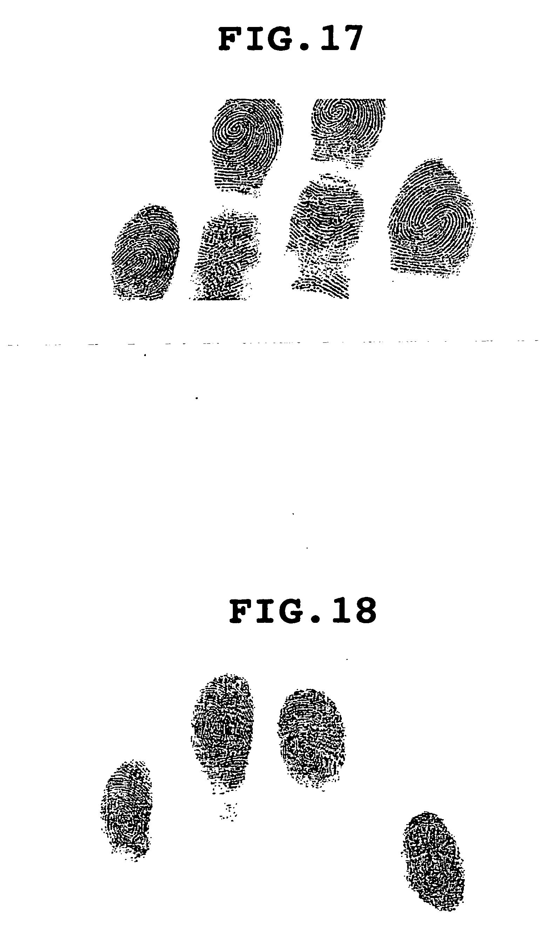

As a method of determining between hands in a plain four-finger image, proposed with ease is using a height of a top (tip) of an impression of each finger. However, a fingertip is often impressed outside of a scan region and in such a case, a height of the impression fails to represent a height (length) of an original finger. Example taken in such a case is shown in Fig. 17. On the other hand, a finger might be impressed faintly in some cases and a height of a top of the impression fails to represent a height (length) of an original finger in these cases.

In order to solve the above-described problems, the present invention verifies between hands and verifies a kind of finger by using not a height of a top of an impression of each finger but a height of a core of a fingerprint. Since also in a case of the example illustrated in Fig. 17, position (height) of a core of a fingerprint can be accurately extracted, application of the present invention enables accurate hand determination and determination of a kind of finger. On the other hand, in a case where an upper part of a fingertip is too thinly impressed to extract a core of a fingerprint or in a case where an image is too unclear, because such a case is found, for example, at a time point of extraction of the core of the fingerprint at step 403 in Fig. 4, warning at that time prevents erroneous hand determination and determination of a kind of finger.

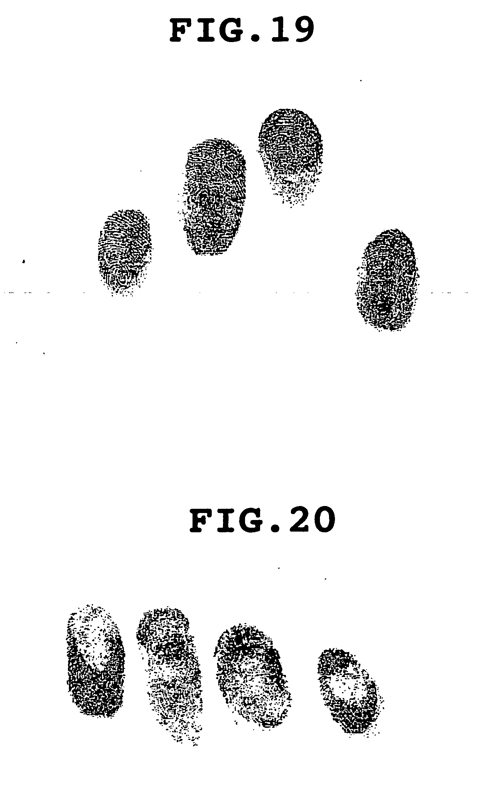

Example of scan of a plain four-finger image is shown in Figs. 18 to 20. Fig. 18 shows an example of ordinary scan of four fingers, while Fig. 19 shows an example of scan of the fingers with a middle finger bent in which as compared with the plain four-finger image shown in Fig. 18, a height of an impression of the middle finger is small. Fig. 20 shows an example of scan with a middle finger and a ring finger bent, in which impressions of the middle finger and the ring finger have smaller heights than ordinary ones.

In a case of a plain four-finger image having so-called poor quality as shown in Fig. 19 and Fig. 20, accurate hand determination is impossible even by using a height of a core of a fingerprint.

Even such a plain four-finger image having malicious intentions, however, is not affected by a direction tendency of a ridge line direction of a fingerprint, so that accurate determination can be made of confidence of hand determination and a kind of finger based on a direction tendency. Therefore, hand determination and kind of finger determination precision can be improved by evaluating the confidence together with confidence of hand determination and a kind of finger based on a core positional relationship.

In the plain four-finger image determination device according to the present embodiment, the functions of the data processing control unit 21, the plain four-finger cut-out unit 23, the direction and core extraction unit 24, the core positional relationship evaluation unit 25, the direction combination evaluation unit 26 and the hand determination and kind of finger determination unit 27 as the respective components forming the data processing unit 13 can be realized by hardware and the functions executed by these components can be realized as software as well.

In this case, executing a computer program (a plain four-finger image determination program 300) having the functions executed by the above components on a computer processor forming the data processing unit 13 enables the above-described processing of determining between hands and determining a kind of finger from a plain four-finger image to be realized as software by the computer processing device.

The computer program is stored in a recording medium such as a magnetic disc or a semiconductor memory. Then, the program is loaded from the recording medium into the computer processing device and executed.

Although the present invention has been described with respect to a plurality of preferred embodiments in the foregoing, the present invention is not necessarily limited to the above-described embodiments and can be implemented in various forms within the range of its technical idea.

Although the plain four-finger image determination devices according to the above embodiments have been described with respect to arrangement of making hand determination and determination of a kind of finger based on a core positional relationship and making hand determination and determination of a kind of finger based on a direction tendency, setting confidence to the determinations, and merging both the determinations to ultimately decide hand determination and a kind of finger, the device can be arranged to decide hand determination and a kind of finger of a plain four-finger image only by hand determination and determination of a kind of finger based on a core positional relationship (Step 404) or hand determination and determination of a kind of finger based on a direction tendency (Step 405).

The plain four-finger image determination device, the plain four-finger image determination method and the plain four-finger image determination program according to the present invention achieve the following effects.

First, accurate hand determination and determination of a kind of finger from a plain four-finger image can be made.

The reason is that a tendency of a ridge line direction is determined in each fingerprint of each finger, hand determination and determination of a kind of finger are made based on a combination of tendencies of ridge line directions of the four fingers and hand determination and determination of a kind of finger are made based on a relationship among heights of cores of fingerprints extracted from the fingerprint image.

Secondly, accurate hand determination and determination of a kind of finger from a plain four-finger image can be made even from a plain four-finger image having poor quality.

The reason is that hand determination and determination of a kind of finger based on a combination of tendencies of ridge line directions and hand determination and determination of a kind of finger based on a relationship among heights of cores of the fingerprints are combined to make determination.

Although the invention has been illustrated and described with respect to exemplary embodiment thereof, it should be understood by those skilled in the art that the foregoing and various other changes, omissions and additions may be made therein and thereto, without departing from the scope of the present invention.

**Claims**

1.  A plain four-finger image determination device which makes hand determination and a determination of a kind of finger from a plain four-finger image of a hand, comprising:

    a unit (24) which cuts out a fingerprint image of each finger from said plain four-finger image to extract a core of a fingerprint from each cut-out fingerprint image and a ridge line direction in the vicinity of the core of the fingerprint, and
    a unit which verifies whether the hand is a right hand or a left hand and a kind of finger based on a relationship of heights of cores of fingerprints in said respective fingers and a combination of tendencies of said ridge line directions each determined for each of the fingerprints of said respective fingers;
    **characterized in that**
    to said hand determination and determination of a kind of finger made based on said relationship of heights of cores of said fingerprints and said combination of tendencies of the ridge line directions as a determination result, confidence of a predetermined value indicative of probability of each determination is set to ultimately decide said determination of a kind of hand and determination of a kind of finger based on confidence obtained by merging said confidences of both the determination results.

**2.** The plain four-finger image determination device as set forth in claim 1, wherein when in a fingerprint image of four fingers, three or more fingers have said ridge line directions inclining down right, determination is made that the fingers are of a right hand.

**3.** The plain four-finger image determination device as set forth in claim 1, wherein when in said fingerprint image of four fingers, three or more fingers have said ridge line directions inclining down left, determination is made that the fingers are of a left hand.

**4.** The plain four-finger image determination device as set forth in claim 1, wherein when in said fingerprint image of four fingers, two or more fingers have said ridge line directions inclining down right and not more than one finger has said ridge line direction inclining down left, determination is made that the fingers are of a right hand.

**5.** The plain four-finger image determination device as set forth in claim 1, wherein when in said fingerprint image of four fingers, two or more fingers have said ridge line directions inclining down left and not more than one finger has said ridge line direction inclining down right, determination is made that the fingers are of a left hand.

**6.** The plain four-finger image determination device as set forth in one of the claims 1 to 5, wherein assuming that in said fingerprint image of four fingers, heights of cores of fingerprints in said respective fingers are represented as $Y1$, $Y2$, $Y3$ and $Y4$, respectively, from left, when the relationship $Y2>Y3>Y1>Y4$ holds, determination is made that the fingers are of a right hand.

**7.** The plain four-finger image determination device as set forth in one of the claims 1 to 5, wherein assuming that in said fingerprint image of four fingers, heights of cores of fingerprints in said respective fingers are represented as $Y1$, $Y2$, $Y3$ and $Y4$, respectively, from left, when the relationship $Y3>Y2>Y4>Y1$ holds, determination is made that the fingers are of a left hand.

**8.** The plain four-finger image determination device as set forth in one of the claims 1 to 5, wherein assuming that in said fingerprint image of four fingers, heights of cores of fingerprints of three fingers are represented as $Y1$, $Y2$ and $Y3$, respectively, from left, when the relationship $Y2>Y3>Y1$ or $Y1>Y2>Y3$ holds, determination is made that the fingers are of a right hand.

**9.** The plain four-finger image determination device as set forth in one of the claims 1 to 5, wherein assuming that in said fingerprint image of four fingers, heights of cores of fingerprints of three fingers are represented as $Y1$, $Y2$ and $Y3$, respectively, from left, when the relationship $Y2>Y1>Y3$ or $Y3>Y2>Y1$ holds, determination is made that the fingers are of a left hand.

**10.** The plain four-finger image determination device as set forth one of the claims 1 to 9, wherein when confidence obtained by merging said confidences is larger than a preset threshold value, determination is made that said hand determination and kind of finger indicated by said determination result are ultimate hand determination and kind of finger and when said confidence obtained by merging is smaller than said threshold value, determination is made that hand determination and a kind of finger are unknown.

**11.** The plain four-finger image determination device as set forth in one of the claims 1 to 10, comprising:

a cut-out unit which cuts out a fingerprint image of each finger from said plain four-finger image
an extraction unit which extracts a core of a fingerprint from a cut-out fingerprint image of each finger and extracts a ridge line direction in the vicinity of the core of the fingerprint from each cut-out fingerprint image,
a core positional relationship evaluation unit (25) which makes said determination of a kind of finger based on a relationship of heights of cores of the fingerprints in said respective fingers,
a direction combination evaluation unit (26) which determines a tendency of said ridge line direction for each of the fingerprints of said respective fingers to make said hand determination based on a combination of tendencies of said ridge line directions of said four fingers, and
a hand determination and kind of finger determination unit (27) which integrates said predetermined confidences each indicative of probability of determination with said hand determination and determination of a kind of finger made based on said combination of tendencies of the ridge line directions and said relationship of heights of cores of the fingerprints as a determination result to make ultimate decision of said hand determination and determination of a kind of finger.

12. A plain four-finger image determination method of hand determination and determining a kind of finger from a plain four-finger image of a hand, comprising the steps of:

cutting out a fingerprint image of each finger from said plain four-finger image,
extracting a core of a fingerprint from each cut-out fingerprint image and a ridge line direction in the vicinity of the core of the fingerprint, and
determining whether the hand is a right hand or a left hand and a kind of finger based on a relationship of heights of cores of fingerprints in said respective fingers and a combination of said ridge line direction tendencies each determined for each fingerprint of said each finger,
**characterized in that**
to said hand determination and determination of a kind of finger made based on said relationship of heights or cores of said fingerprints and said combination of tendencies of the ridge line directions as a determination result, confidence of a predetermined value indicative of probability of each determination is set to ultimately decide said hand determination and determination of a kind of finger based on confidence obtained by merging said confidences of both the determination results.

13. The plain four-finger image determination method as set forth in claim 12, wherein when in a fingerprint image of four fingers, three or more fingers have said ridge line directions inclining down right, determination is made that the fingers are of a right hand.

14. The plain four-finger image determination method as set forth in claim 12, wherein when in said fingerprint image of four fingers, three or more fingers have said ridge line directions inclining down left, determination is made that the fingers are of a left hand.

15. The plain four-finger image determination method as set forth in claim 12, wherein when in said fingerprint image of four fingers, two or more fingers have said ridge line directions inclining down right and not more than one finger has said ridge line directions inclining down left, determination is made that the fingers are of a right hand.

16. The plain four-finger image determination method as set forth in claim 12, wherein when in said fingerprint image of four fingers, two or more fingers have said ridge line directions inclining down left and not more than one finger has said ridge line direction inclining down right, determination is made that the fingers are of a left hand.

17. The plain four-finger image determination method as set forth in one of the claims 12 to 16, wherein assuming that in said fingerprint image of four fingers, heights of cores of fingerprints in said respective fingers are represented as $Y1$, $Y2$, $Y3$ and $Y4$, respectively, from left, when the relationship $Y2>Y3>Y1>Y4$ holds, determination is made that the fingers are of a right hand.

18. The plain four-finger image determination method as set forth in one of the claims 12 to 16, wherein assuming that in said fingerprint image of four fingers, heights of cores of fingerprints in said respective fingers are represented as $Y1$, $Y2$, $Y3$ and $Y4$, respectively, from left, when the relationship $Y3>Y2>Y4>Y1$ holds, determination is made that the fingers are of a left hand.

19. The plain four-finger image determination method as set forth in one of the claims 12 to 18, wherein when confidence obtained by merging said confidences is larger than a preset threshold value, determination is made that said hand determination and kind of finger indicated by said determination result are ultimate hand determination and kind of finger and when said confidence obtained by merging is smaller than said threshold value, determination is made that hand determination and determination of a kind of finger are unknown.

20. A plain four-finger image determination program for controlling a computer to execute processing of hand determination and determining a kind of finger from a plain four-finger image of a hand, which executes the functions of:

cutting out a fingerprint image of each finger from said plain four-finger image,
extracting a core of a fingerprint from each cut-out fingerprint image and a ridge line direction in the vicinity of the core of the fingerprint, and

determining whether the hand is a right hand or a left hand and a kind of finger based on a relationship of heights of cores of fingerprints in said respective fingers and a combination of said ridge line direction tendencies each determined for each fingerprint of said each finger,

**characterized by**

the function of setting, to said hand determination and determination of a kind of finger based on said relationship of heights of cores of the fingerprints and said combination of the ridge line direction tendencies as a determination result, confidence of a predetermined value indicative of probability of each determination to ultimately decide said hand determination and determination of a kind of finger based on confidence obtained by merging said confidences of both the determination results.

21. The plain four-finger image determination program as set forth in claim 20, which has the function of, when in a fingerprint image of four fingers, three or more fingers have said ridge line directions inclining down right, determining that the fingers are of a right hand.

22. The plain four-finger image determination program as set forth in claim 20, which has the function of, when in said fingerprint image of four fingers, three or more fingers have said ridge line directions inclining down left, determining that the fingers are of a left hand.

23. The plain four-finger image determination program as set forth in claim 20, which has the function of when in said fingerprint image of four fingers, two or more fingers have said ridge line directions inclining down right and not more than one finger has said ridge line direction inclining down left, determining that the fingers are of a right hand.

24. The plain four-finger image determination program as set forth in claim 20, which has the function of, when in said fingerprint image of four fingers, two or more fingers have said ridge line directions inclining down left and not more than one finger has said ridge line direction inclining down right, determining that the fingers are of a left hand.

25. The plain four-finger image determination program as set forth in one of the claims 20 to 24, which has the function of, assuming that in said fingerprint image of four fingers, heights of cores of fingerprints in said respective fingers are represented as $Y1$, $Y2$, $Y3$ and $Y4$, respectively, from left, when the relationship $Y2>Y3>Y1>Y4$ holds, determining that the fingers are of a right hand.

26. The plain four-finger image determination program as set forth in one of the claims 20 to 24, which has the function of, assuming that in said fingerprint image of four fingers, heights of cores of fingerprints in said respective fingers are represented as $Y1$, $Y2$, $Y3$ and $Y4$, respectively, from left, when the relationship $Y3>Y2>Y4>Y1$ holds, determining that the fingers are of a left hand.

27. The plain four-finger image determination program as set forth in one of the claims 20 to 26, which has the function of, when confidence obtained by merging said confidences is larger than a preset threshold value, deciding said hand determination and kind of finger indicated by said determination result as ultimate hand determination and kind of finger and when said confidence obtained by merging is smaller than said threshold value, determining that hand determination and determination of a kind of finger are unknown.

**Patentansprüche**

1. Vorrichtung zum Bestimmung eines flachen Vierfingerbildes, die eine Handbestimmung und eine Bestimmung eines Typs eines Fingers aus einem flachen Vierfingerbild einer Hand durchführt, mit:

einer Einheit (24), die aus dem flachen Vierfingerbild ein Fingerabdruckbild von jedem Finger ausschneidet, um einen Mittelteil eines Fingerabdrucks von jedem ausgeschnittenen Fingerabdruckbild und einer Gratlinienrichtung in der Nähe des Mittelteils des Fingerabdrucks zu extrahieren, und

einer Einheit, die verifiziert, ob die Hand eine rechte Hand ist oder eine linke Hand ist, und eines Typs eines Fingers auf der Grundlage eines Verhältnisses der Höhen von Mittelteilen von Fingerabdrücken in den entsprechenden Fingern und einer Kombination von Tendenzen der Gratlinienrichtungen, die jeweils für jeden der Fingerabdrücke der entsprechenden Finger bestimmt wurden;

**dadurch gekennzeichnet, dass**

für die Handbestimmung und die Bestimmung eines Typs eines Fingers, die auf der Grundlage des Verhältnisses von Höhen der Mittelteile der Fingerabdrücke und der Kombination von Neigungen der Gratlinienrichtungen vorgenommen werden, als Bestimmungsergebnis eine Aussagewahrscheinlichkeit eines vorbestimmten Werts, der eine Wahrscheinlichkeit von jeder Bestimmung angibt, festgelegt wird, um abschließend die Bestimmung eines Typs einer Hand und die Bestimmung eines Typs eines Fingers auf der Grundlage einer Aussagewahrscheinlichkeit festzulegen, die erhalten wird, indem die Aussagewahrscheinlichkeiten beider Bestimmungsergebnisse verknüpft werden.

2. Vorrichtung zur Bestimmung eines flachen Vierfingerbildes nach Anspruch 1, bei der, wenn in einem Fingerabdruckbild von vier Fingern drei oder mehr Finger die Gratlinienrichtungen haben, die sich nach rechts unten neigen, festgelegt wird, dass die Finger von einer rechten Hand stammen.

3. Vorrichtung zur Bestimmung eines flachen Vierfingerbildes nach Anspruch 1, bei der, wenn in dem Fingerabdruckbild von vier Fingern drei oder mehr Finger die Gratlinienrichtungen haben, die sich nach unten links neigen, festgelegt wird, dass die Finger von einer linken Hand stammen.

4. Vorrichtung zur Bestimmung eines flachen Vierfingerbildes nach Anspruch 1, bei der, wenn in dem Fingerabdruckbild von vier Fingern zwei oder mehr Finger die Gratlinienrichtungen haben, die sich nach unten rechts neigen, und nicht mehr als ein Finger die Gratlinienrichtung hat, die sich nach unten links neigt, festgelegt wird, dass die Finger von einer rechten Hand sind.

5. Vorrichtung zur Bestimmung eines flachen Vierfingerbildes nach Anspruch 1, bei der, wenn in dem Fingerabdruckbild von vier Fingern zwei oder mehr Finger die Gratlinienrichtungen haben, die sich nach unten links neigen, und nicht mehr als ein Finger die Gratlinienrichtung hat, die sich nach unten rechts neigt, festgelegt wird, dass die Finger von einer linken Hand stammen.

6. Vorrichtung zur Bestimmung eines flachen Vierfingerbildes nach einem der Ansprüche 1 bis 5, bei der unter der Voraussetzung, dass in dem Fingerabdruckbild von vier Fingern Höhen von Mittelteilen von Fingerabdrückeri in den entsprechenden Fingern ausgehend von links als Y1, Y2, Y3 bzw. Y4 angegeben sind, wenn das Verhältnis Y2 > Y3 > Y1 > Y4 zutrifft, festgelegt wird, dass die Finger von einer rechten Hand stammen.

7. Vorrichtung zur Ermittlung eines flachen Vierfingerbildes nach einem der Ansprüche 1 bis 5, bei der unter der Voraussetzung, dass in dem Fingerabdruckbild von vier Fingern Höhen von Mittelteilen von Fingerabdrücken in den entsprechenden Fingern ausgehend von links als Y1, Y2, Y3 bzw. Y4 angegeben sind, wenn das Verhältnis Y3 > Y2 > Y4 > Y1 zutrifft, festgelegt wird, dass die Finger von einer linken Hand stammen.

8. Vorrichtung zur Ermittlung eines flachen Vierfingerbildes nach einem der Ansprüche 1 bis 5, bei der unter der Voraussetzung, dass in dem Fingerabdruckbild von vier Fingern Höhen von Mittelteilen von Fingerabdrücken von drei Fingern ausgehend von links als Y1, Y2 bzw. Y3 angegeben sind, wenn das Verhältnis Y2 > Y3 > Y1 oder Y1 > Y2 > Y3 zutrifft, festgelegt wird, dass die Finger von einer rechten Hand stammen.

9. Vorrichtung zur Ermittlung eines flachen Vierfingerbildes nach einem der Ansprüche 1 bis 5, bei dem unter der Voraussetzung, dass in dem Fingerabdruckbild von vier Fingern Höhen von Mittelteilen von Fingerabdrücken von drei Fingern ausgehend von links als Y1, Y2 bzw. Y3 angegeben sind, wenn das Verhältnis Y2 > Y1 > Y3 oder Y3 > Y2 > Y1 zutrifft, festgelegt wird, dass die Finger von einer linken Hand stammen.

10. Vorrichtung zur Ermittlung eines flachen Vierfingerbildes nach einem der Ansprüche 1 bis 9, bei der, wenn eine durch Verknüpfen der Aussagewahrscheinlichkeiten erhaltene Aussagewahrscheinlichkeit größer als ein vorab festgelegter Grenzwert ist, festgelegt wird, dass die Handbestimmung und eines Typs eines Fingers, die von dem Bestimmungsergebnis angegeben werden, eine endgültige Handbestimmung und eines Typs eines Fingers sind, und wenn die durch Kombinieren erhaltene Aussagewahrscheinlichkeit kleiner als der Grenzwert ist, festgelegt wird, dass die Handbestimmung und eines Typs eines Fingers unbekannt sind.

11. Vorrichtung zur Ermittlung eines flachen Vierfingerbildes nach einem der Ansprüche 1 bis 10, mit:

einer Ausschnittseinheit, die aus dem flachen Vierfingerbild ein Fingerabdruckbild von jedem Finger ausschneidet,
einer Extraktionseinheit, die einen Mittelteil eines Fingerabdrucks von einem ausgeschnittenen Fingerabdruckbild jedes Fingers extrahiert und eine Gratlinienrichtung in der Nähe des Mittelteils des Fingerabdrucks von jedem ausgeschnittenen Fingerabdruckbild extrahiert,

einer Einheit (25) zur Evaluierung von Verhältnissen von Mittelteilen hinsichtlich der Position, die die Bestimmung eines Typs eines Fingers auf der Grundlage eines Verhältnisses von Höhen von Mittelteilen der Fingerabdrücke in den entsprechenden Fingern durchführt,

einer Richtungskombinationsevaluierungseinheit (26), die eine Tendenz jeder Gratlinienrichtung für jeden der Fingerabdrücke der entsprechenden Finger ermittelt, um die Handbestimmung auf der Grundlage einer Kombination von Tendenzen der Gratlinienrichtung der vier Finger vorzunehmen, und

einer Handbestimmungs- und Fingertypbestimmungseinheit (27), die die vorbestimmten Aussagewahrscheinlichkeiten, die jeweils eine Wahrscheinlichkeit einer Bestimmung für die Handbestimmung und die Bestimmung eines Typs eines Fingers angeben, die auf der Grundlage der Kombination von Tendenzen der Gratlinienrichtungen und des Verhältnisses von Höhen von Mittelteilen der Fingerabdrücken vorgenommen werden, als Bestimmungsergebnis integriert, um eine endgültige Entscheidung für die Handbestimmung und die Bestimmung eines Typs eines Fingers vorzunehmen.

12. Verfahren zur Bestimmung eines flachen Vierfingerbildes zur Handbestimmung und Bestimmung eines Typs eines Fingers aus einem flachen Vierfingerbild einer Hand, die Schritte umfassend:

Ausschneiden eines Fingerabdruckbilds von jedem Finger aus dem flachen Vierfingerbild,

Extrahieren eines Mittelteils eines Fingerabdrucks von jedem ausgeschnittenen Fingerabdruckbild und einer Gratlinienrichtung in der Nähe des Mittelteils des Fingerabdrucks, und

Ermitteln, ob die Hand eine rechte Hand oder eine linke Hand ist, und eines Typs eines Fingers auf der Grundlage eines Verhältnisses von Höhen von Mittelteilen von Fingerabdrücken der entsprechenden Finger und einer Kombination von Tendenzen der Gratlinienrichtungen, die jeweils für jeden Fingerabdruck des jeden Fingers ermittelt werden,

**dadurch gekennzeichnet, dass**

für die Handbestimmung und die Bestimmung eines Typs eines Fingers, die auf der Grundlage des Verhältnisses von Höhen von Mittelteilen der Fingerabdrücke und der Kombination von Tendenzen der Gratlinienrichtungen vorgenommen werden, als Bestimmungsergebnis eine Aussagewahrscheinlichkeit mit einem vorbestimmten Wert, der eine Wahrscheinlichkeit für jede Bestimmung angibt, festgelegt wird, um abschließend über die Handbestimmung und die Bestimmung eines Typs eines Fingers auf der Grundlage einer Aussagewahrscheinlichkeit zu entscheiden, die erhalten wird, indem die Aussagewahrscheinlichkeiten von beiden Bestimmungsergebnissen kombiniert werden.

13. Verfahren zur Bestimmung eines flachen Vierfingerbildes nach Anspruch 12, bei dem, wenn in einem Fingerabdruckbild von vier Fingern drei oder mehr Finger die Gratlinienrichtungen haben, die sich nach unten rechts neigt, festgelegt wird, dass die Finger von einer rechten Hand stammen.

14. Verfahren zur Bestimmung eines flachen Vierfingerbildes nach Anspruch 12, bei dem, wenn in einem Fingerabdruckbild von vier Fingern drei oder mehr Finger die Gratlinienrichtungen haben, die sich nach links unten neigen, festgelegt wird, dass die Finger von einer linken Hand stammen.

15. Verfahren zur Bestimmung eines flachen Vierfingerbildes nach Anspruch 12, bei dem, wenn in dem Fingerabdruckbild von vier Fingern zwei oder mehr Finger die Gratlinienrichtungen haben, die sich nach unten rechts neigen, und nicht mehr als ein Finger die Gratlinienrichtung aufweist, die sich nach unten links neigt, festgelegt wird, dass die Finger von einer rechten Hand stammen.

16. Verfahren zur Bestimmung eines flachen Vierfingerbildes nach Anspruch 12, bei dem, wenn in dem Fingerabdruckbild von vier Fingern zwei oder mehr Finger die Gratlinienrichtungen haben, die sich nach unten links neigen, und nicht mehr als ein Finger die Gratlinienrichtung hat, die sich nach unten rechts neigt, festgelegt wird, dass die Finger von einer linken Hand stammen.

17. Verfahren zur Bestimmung eines flachen Vierfingerbildes nach einem der Ansprüche 12 bis 16, bei dem unter der Voraussetzung, dass in dem Fingerabdruckbild von vier Fingern Höhen von Mittelteilen von Fingerabdrücken in den entsprechenden Fingern ausgehend von links als Y1, Y2, Y3 bzw. Y4 angegeben sind, wenn das Verhältnis Y2 > Y3 > Y1 > Y4 zutrifft, festgelegt wird, dass die Finger von einer rechten Hand stammen.

18. Verfahren zur Bestimmung eines flachen Vierfingerbildes nach einem der Ansprüche 12 bis 16, bei dem unter der Voraussetzung, dass in dem Fingerabdruckbild von vier Fingern Höhen von Mittelteilen von Fingerabdrücken in den entsprechenden Fingern ausgehend von links als Y1, Y2, Y3 bzw. Y4 angegeben sind, wenn das Verhältnis Y3 > Y2 > Y4 > Y1 zutrifft, festgelegt wird, dass die Finger von einer linken Hand stammen.

**19.** Verfahren zur Bestimmung eines flachen Vierfingerbildes nach einem der Ansprüche 12 bis 18, bei dem, wenn eine durch Kombinieren der Aussagewahrscheinlichkeiten erhaltene Aussagewahrscheinlichkeit größer als ein vorab festgelegter Grenzwert ist, festgelegt wird, dass die Handbestimmung und eines Typs eines Fingers, die von dem Bestimmungsergebnis angegeben werden, eine endgültige Handbestimmung und eines Typs eines Fingers sind, und wenn die durch Kombinieren erhaltene Aussagewahrscheinlichkeit kleiner als der Grenzwert ist, festgelegt wird, dass die Handbestimmung und eines Typ eines Fingers unbekannt sind.

**20.** Programm zur Bestimmung eines flachen Vierfingerbildes zur Steuerung eines Computers, um eine Verarbeitung zur Handbestimmung und Bestimmung eines Typs eines Fingers aus einem flachen Vierfingerbild einer Hand auszuführen, das die Funktionen ausführt:

Ausschneiden eines Fingerabdruckbilds von jedem Finger aus dem flachen Vierfingerbild,
Extrahieren eines Mittelteils eines Fingerabdrucks von jedem ausgeschnittenen Fingerabdruckbild und einer Gratlinienrichtung in der Nähe des Mittelteils des Fingerabdrucks, und
Ermitteln, ob die Hand eine rechte Hand oder eine linke Hand ist, und eines Typs eines Fingers auf der Grundlage eines Verhältnisses von Höhen von Mittelteilen von Fingerabdrücken der entsprechenden Finger und einer Kombination von Tendenzen der Gratlinienrichtungen, die jeweils für jeden Fingerabdruck des jeden Fingers ermittelt werden,
**gekennzeichnet durch**
die Funktion, für die Handbestimmung und die Bestimmung eines Typs eines Fingers, die auf der Grundlage des Verhältnisses von Höhen von Mittelteilen der Fingerabdrücke und der Kombination von Tendenzen der Gratlinienrichtungen vorgenommen werden, als Bestimmungsergebnis eine Aussagewahrscheinlichkeit mit einem vorbestimmten Wert, der eine Wahrscheinlichkeit für jede Bestimmung angibt, festzulegen, um abschließend über die Handbestimmung und die Bestimmung eines Typs eines Fingers auf der Grundlage einer Aussagewahrscheinlichkeit zu entscheiden, die erhalten wird, indem die Aussagewahrscheinlichkeiten von beiden Bestimmungsergebnissen kombiniert werden.

**21.** Programm zur Bestimmung eines flachen Vierfingerbildes nach Anspruch 20, das die Funktion aufweist, wenn in einem Fingerabdruckbild von vier Fingern drei oder mehr Finger die Gratlinienrichtungen haben, die sich nach rechts unten neigen, festzulegen, dass die Finger von einer rechten Hand stammen.

**22.** Programm zur Bestimmung eines flachen Vierfingerbildes nach Anspruch 20, das die Funktion aufweist, wenn in dem Fingerabdruckbild von vier Fingern drei oder mehr Finger die Gratlinienrichtungen haben, die sich nach unten links neigen, festzulegen, dass die Finger von einer linken Hand stammen.

**23.** Programm zur Bestimmung eines flachen Vierfingerbildes nach Anspruch 20, das die Funktion aufweist, wenn in dem Fingerabdruckbild von vier Fingern zwei oder mehr Finger die Gratlinienrichtungen haben, die sich nach unten rechts neigen, und nicht mehr als ein Finger die Gratlinienrichtung aufweist, die sich nach unten links neigt, festzulegen, dass die Finger von einer rechten Hand stammen.

**24.** Programm zur Bestimmung eines flachen Vierfingerbildes nach Anspruch 20, das die Funktion aufweist, wenn in dem Fingerabdruckbild von vier Fingern zwei oder mehr Finger die Gratlinienrichtungen haben, die sich nach unten links neigen, und nicht mehr als ein Finger die Gratlinienrichtung hat, die sich nach unten rechts neigt, festzulegen, dass die Finger von einer linken Hand stammen.

**25.** Programm zur Bestimmung eines flachen Vierfingerbildes nach einem der Ansprüche 20 bis 24, das die Funktion aufweist, unter der Voraussetzung, dass in dem Fingerabdruckbild von vier Fingern Höhen von Mittelteilen von Fingerabdrücken in den entsprechenden Fingern ausgehend von links als Y1, Y2, Y3 bzw. Y4 angegeben sind, wenn das Verhältnis Y2 > Y3 > Y1 > Y4 zutrifft, festzulegen, dass die Finger von einer rechten Hand stammen.

**26.** Programm zur Bestimmung eines flachen Vierfingerbildes nach einem der Ansprüche 20 bis 25, das die Funktion aufweist, unter der Voraussetzung, dass in dem Fingerabdruckbild von vier Fingern Höhen von Mittelteilen von Fingerabdrücken in den entsprechenden Fingern ausgehend von links als Y1, Y2, Y3 bzw. Y4 angegeben sind, wenn das Verhältnis Y3 > Y2 > Y4 > Y1 zutrifft, festzulegen, dass die Finger von einer linken Hand stammen.

**27.** Programm zur Bestimmung eines flachen Vierfingerbildes nach einem der Ansprüche 20 bis 26, das die Funktion aufweist, wenn eine durch Kombinieren der Aussagewahrscheinlichkeiten erhaltene Aussagewahrscheinlichkeit größer als ein vorab festgelegter Grenzwert ist, festzulegen, dass die Handbestimmung und eines Typs eines Fingers, die von dem Bestimmungsergebnis angegeben werden, eine endgültige Handbestimmung und eines Typs eines Fingers sind, und wenn die durch Kombinieren erhaltene Aussagewahrscheinlichkeit kleiner als der Grenzwert ist, festzulegen, dass die Handbestimmung und eines Typs des Fingers unbekannt sind.

**Revendications**

**1.** Dispositif de détermination d'image simple à quatre doigts qui fait une détermination d'une main et une détermination d'un genre de doigt à partir d'une image simple à quatre doigts d'une main, comprenant :

une unité (24) qui découpe une image d'empreinte digitale de chaque doigt depuis ladite image simple à quatre doigts pour extraire un coeur d'une empreinte digitale depuis chaque image d'empreinte digitale découpée et une direction de ligne de crête au voisinage du coeur de l'empreinte digitale, et
une unité qui vérifie si la main est une main droite ou une main gauche et un genre de doigt en se basant sur une relation de hauteurs de coeurs d'empreintes digitales dans lesdits doigts respectifs et une combinaison de tendances desdites directions de ligne de crête, chacune étant déterminée pour chacune des empreintes digitales desdits doigts respectifs;
**caractérisé en ce que**
pour lesdites détermination d'une main et détermination d'un genre de doigt faites en se basant sur ladite relation de hauteurs de coeurs desdites empreintes digitales et ladite combinaison de tendances des directions de ligne de crête en tant que résultat de détermination, la confiance d'une valeur prédéterminée indicative de la probabilité de chaque détermination est définie afin de décider finalement desdites détermination d'un genre de main et détermination d'un genre de doigt en se basant sur la confiance obtenue en fusionnant lesdites confiances des deux résultats de détermination.

**2.** Dispositif de détermination d'image simple à quatre doigts selon la revendication 1, dans lequel lorsque dans une image d'empreintes digitales de quatre doigts, trois doigts ou plus ont lesdites directions de ligne de crête s'inclinant vers le bas à droite, il est déterminé que les doigts sont ceux d'une main droite.

**3.** Dispositif de détermination d'image simple à quatre doigts selon la revendication 1, dans lequel lorsque dans ladite image d'empreintes digitales de quatre doigts, trois doigts ou plus ont lesdites directions de ligne de crête s'inclinant vers le bas à gauche, il est déterminé que les doigts sont ceux d'une main gauche.

**4.** Dispositif de détermination d'image simple à quatre doigts selon la revendication 1, dans lequel lorsque dans ladite image d'empreintes digitales de quatre doigts, deux doigts ou plus ont lesdites directions de ligne de crête s'inclinant vers le bas à droite et que pas plus d'un doigt n'a ladite direction de ligne de crête s'inclinant vers le bas à gauche, il est déterminé que les doigts sont ceux d'une main droite.

**5.** Dispositif de détermination d'image simple à quatre doigts selon la revendication 1, dans lequel lorsque dans ladite image d'empreintes digitales de quatre doigts, deux doigts ou plus ont lesdites directions de ligne de crête s'inclinant vers le bas à gauche et que pas plus d'un doigt n'a ladite direction de ligne de crête s'inclinant vers le bas à droite, il est déterminé que les doigts sont ceux d'une main gauche.

**6.** Dispositif de détermination d'image simple à quatre doigts selon l'une des revendications 1 à 5, dans lequel en supposant que dans ladite image d'empreintes digitales de quatre doigts, les hauteurs des coeurs des empreintes digitales dans lesdits doigts respectifs sont représentées par Y1, Y2, Y3 et Y4, respectivement, à partir de la gauche, lorsque la relation $Y2 > Y3 > Y1 > Y4$ est vérifiée, il est déterminé que les doigts sont ceux d'une main droite.

**7.** Dispositif de détermination d'image simple à quatre doigts selon l'une des revendications 1 à 5, dans lequel en supposant que dans ladite image d'empreintes digitales de quatre doigts, les hauteurs des coeurs des empreintes digitales dans lesdits doigts respectifs sont représentées par Y1, Y2, Y3 et Y4, respectivement, à partir de la gauche, lorsque la relation $Y3 > Y2 > Y4 > Y1$ est vérifiée, il est déterminé que les doigts sont ceux d'une main gauche.

**8.** Dispositif de détermination d'image simple à quatre doigts selon l'une des revendications 1 à 5, dans lequel en supposant que dans ladite image d'empreintes digitales de quatre doigts, les hauteurs des coeurs des empreintes

EP 1 643 414 B1

digitales de trois doigts sont représentées par Y1, Y2 et Y3, respectivement, à partir de la gauche, lorsque la relation Y2 > Y3 > Y1 ou Y1 > Y2 > Y3 est vérifiée, il est déterminé que les doigts sont ceux d'une main droite.

9. Dispositif de détermination d'image simple à quatre doigts selon l'une des revendications 1 à 5, dans lequel en supposant que dans ladite image d'empreintes digitales de quatre doigts, les hauteurs des coeurs des empreintes digitales de trois doigts sont représentées par Y1, Y2 et Y3, respectivement, à partir de la gauche, lorsque la relation Y2 > Y1 > Y3 ou Y3 > Y2 > Y1 est vérifiée, il est déterminé que les doigts sont ceux d'une main gauche.

10. Dispositif de détermination d'image simple à quatre doigts selon l'une des revendications 1 à 9, dans lequel lorsque la confiance obtenue en fusionnant lesdites confiances est supérieure à une valeur de seuil prédéfinie, il est déterminé que ladite détermination d'une main et ledit genre de doigt indiqués par ledit résultat de détermination sont la détermination d'une main et le genre de doigt finals et lorsque ladite confiance obtenue par la fusion est inférieure à ladite valeur de seuil, il est déterminé que la détermination d'une main et un genre de doigt sont inconnus.

11. Dispositif de détermination d'image simple à quatre doigts selon l'une des revendications 1 à 10, comprenant:

une unité de découpage qui découpe une image d'empreinte digitale de chaque doigt depuis ladite image simple à quatre doigts,
une unité d'extraction qui extrait un coeur d'une empreinte digitale depuis une image d'empreinte digitale découpée de chaque doigt et extrait une direction de ligne de crête au voisinage du coeur de l'empreinte digitale depuis chaque image d'empreinte digitale découpée,
une unité d'évaluation de relation positionnelle de coeur (25) qui fait ladite détermination d'un genre de doigt en se basant sur une relation de hauteurs de coeurs des empreintes digitales dans lesdits doigts respectifs,
une unité d'évaluation de combinaison de directions (26) qui détermine une tendance de ladite direction de ligne de crête pour chacune des empreintes digitales desdits doigts respectifs afin de faire ladite détermination d'une main en se basant sur une combinaison de tendances desdites directions de ligne de crête desdits quatre doigts, et
une unité de détermination d'une main et de détermination d'une genre de doigt (27) qui intègre lesdits confiances prédéterminées, chacune indicative de la probabilité de la détermination, avec lesdites détermination d'une main et détermination d'un genre de doigt faites en se basant sur ladite combinaison de tendances des directions de ligne de crête et ladite relation de hauteurs de coeurs des empreintes digitales en tant que résultat de détermination pour prendre la décision finale desdites détermination d'une main et détermination d'un genre de doigt.

12. Procédé de détermination d'image simple à quatre doigts, de détermination d'une main et de détermination d'un genre de doigt depuis une image simple à quatre doigts d'une main, comprenant les étapes suivantes:

découper une image d'empreinte digitale de chaque doigt depuis ladite image simple à quatre doigts,
extraire un coeur d'une empreinte digitale depuis chaque image d'empreinte digitale découpée et une direction de ligne de crête au voisinage du coeur de l'empreinte digitale, et
déterminer si la main est une main droite ou une main gauche et un genre de doigt en se basant sur une relation de hauteurs de coeurs d'empreintes digitales dans lesdits doigts respectifs et une combinaison de tendances desdites directions de ligne de crête, chacune étant déterminée pour chaque empreinte digitale dudit chaque doigt,
**caractérisé en ce que**
pour lesdites détermination d'une main et détermination d'un genre de doigt faites en se basant sur ladite relation de hauteurs de coeurs desdites empreintes digitales et ladite combinaison de tendances des directions de ligne de crête en tant que résultat de détermination, la confiance d'une valeur prédéterminée indicative de la probabilité de chaque détermination est définie afin de décider finalement desdites détermination d'une main et détermination d'un genre de doigt en se basant sur la confiance obtenue en fusionnant lesdites confiances des deux résultats de détermination.

13. Procédé de détermination d'image simple à quatre doigts selon la revendication 12, dans lequel lorsque dans une image d'empreintes digitales de quatre doigts, trois doigts ou plus ont lesdites directions de ligne de crête s'inclinant vers le bas à droite, il est déterminé que les doigts sont ceux d'une main droite.

14. Procédé de détermination d'image simple à quatre doigts selon la revendication 12, dans lequel lorsque dans ladite image d'empreintes digitales de quatre doigts, trois doigts ou plus ont lesdites directions de ligne de crête s'inclinant vers le bas à gauche, il est déterminé que les doigts sont ceux d'une main gauche.

15. Procédé de détermination d'image simple à quatre doigts selon la revendication 12, dans lequel lorsque dans ladite image d'empreintes digitales de quatre doigts, deux doigts ou plus ont lesdites directions de ligne de crête s'inclinant vers le bas à droite et que pas plus d'un doigt n'a ladite direction de ligne de crête s'inclinant vers le bas à gauche, il est déterminé que les doigts sont ceux d'une main droite.

16. Procédé de détermination d'image simple à quatre doigts selon la revendication 12, dans lequel lorsque dans ladite image d'empreintes digitales de quatre doigts, deux doigts ou plus ont lesdites directions de ligne de crête s'inclinant vers le bas à gauche et que pas plus d'un doigt n'a ladite direction de ligne de crête s'inclinant vers le bas à droite, il est déterminé que les doigts sont ceux d'une main gauche.

17. Procédé de détermination d'image simple à quatre doigts selon l'une des revendications 12 à 16, dans lequel en supposant que dans ladite image d'empreintes digitales de quatre doigts, les hauteurs des coeurs des empreintes digitales dans lesdits doigts respectifs sont représentées par Y1, Y2, Y3 et Y4, respectivement, à partir de la gauche, lorsque la relation $Y2 > Y3 > Y1 > Y4$ est vérifiée, il est déterminé que les doigts sont ceux d'une main droite.

18. Procédé de détermination d'image simple à quatre doigts selon l'une des revendications 12 à 16, dans lequel en supposant que dans ladite image d'empreintes digitales de quatre doigts, les hauteurs des coeurs des empreintes digitales dans lesdits doigts respectifs sont représentées par Y1, Y2, Y3 et Y4, respectivement, à partir de la gauche, lorsque la relation $Y3 > Y2 > Y4 > Y1$ est vérifiée, il est déterminé que les doigts sont ceux d'une main gauche.

19. Procédé de détermination d'image simple à quatre doigts selon l'une des revendications 12 à 18, dans lequel lorsque la confiance obtenue en fusionnant lesdites confiances est supérieure à une valeur de seuil prédéfinie, il est déterminé que lesdites détermination d'une main et détermination d'un genre de doigt indiquées par ledit résultat de détermination sont la détermination d'une main et le genre de doigt finals et lorsque ladite confiance obtenue par la fusion est inférieure à ladite valeur de seuil, il est déterminé que la détermination d'une main et la détermination d'un genre de doigt sont inconnues.

20. Programme de détermination d'image simple à quatre doigts pour commander un ordinateur afin d'exécuter le traitement de détermination d'une main et de détermination d'un genre de doigt depuis une image simple à quatre doigts d'une main, qui exécute les fonctions suivantes :

  découper une image d'empreinte digitale de chaque doigt depuis ladite image simple à quatre doigts, extraire un coeur d'une empreinte digitale depuis chaque image d'empreinte digitale découpée et une direction de ligne de crête au voisinage du coeur de l'empreinte digitale, et déterminer si la main est une main droite ou une main gauche et un genre de doigt en se basant sur une relation de hauteurs de coeurs d'empreintes digitales dans lesdits doigts respectifs et une combinaison de tendances desdites directions de ligne de crête, chacune étant déterminée pour chaque empreinte digitale dudit chaque doigt,
  **caractérisé par**
  la fonction de définir, pour lesdites détermination d'une main et détermination d'un genre de doigt faites en se basant sur ladite relation de hauteurs de coeurs des empreintes digitales et ladite combinaison des tendances des directions de ligne de crête en tant que résultat de détermination, la confiance d'une valeur prédéterminée indicative de la probabilité de chaque détermination afin de décider finalement desdites détermination d'une main et détermination d'un genre de doigt en se basant sur la confiance obtenue en fusionnant lesdites confiances des deux résultats de détermination.

21. Programme de détermination d'image simple à quatre doigts selon la revendication 20, qui a la fonction de, lorsque dans une image d'empreintes digitales de quatre doigts, trois doigts ou plus ont lesdites directions de ligne de crête s'inclinant vers le bas à droite, déterminer que les doigts sont ceux d'une main droite.

22. Programme de détermination d'image simple à quatre doigts selon la revendication 20, qui a la fonction de, lorsque dans ladite image d'empreintes digitales de quatre doigts, trois doigts ou plus ont lesdites directions de ligne de crête s'inclinant vers le bas à gauche, déterminer que les doigts sont ceux d'une main gauche.

23. Programme de détermination d'image simple à quatre doigts selon la revendication 20, qui a la fonction de, lorsque dans ladite image d'empreintes digitales de quatre doigts, deux doigts ou plus ont lesdites directions de ligne de crête s'inclinant vers le bas à droite et que pas plus d'un doigt n'a ladite direction de ligne de crête s'inclinant vers le bas à gauche, déterminer que les doigts sont ceux d'une main droite.

24. Programme de détermination d'image simple à quatre doigts selon la revendication 20, qui a la fonction de, lorsque dans ladite image d'empreintes digitales de quatre doigts, deux doigts ou plus ont lesdites directions de ligne de crête s'inclinant vers le bas à gauche et que pas plus d'un doigt n'a ladite direction de ligne de crête s'inclinant vers le bas à droite, déterminer que les doigts sont ceux d'une main gauche.

25. Programme de détermination d'image simple à quatre doigts selon l'une des revendications 20 à 24, qui a la fonction de,
en supposant que dans ladite image d'empreintes digitales de quatre doigts, les hauteurs des coeurs des empreintes digitales dans lesdits doigts respectifs sont représentées par Y1, Y2, Y3 et Y4, respectivement, à partir de la gauche, lorsque la relation Y2 > Y3 > Y1 > Y4 est vérifiée, déterminer que les doigts sont ceux d'une main droite.

26. Programme de détermination d'image simple à quatre doigts selon l'une des revendications 20 à 24, qui a la fonction de,
en supposant que dans ladite image d'empreintes digitales de quatre doigts, les hauteurs des coeurs des empreintes digitales dans lesdits doigts respectifs sont représentées par Y1, Y2, Y3 et Y4, respectivement, à partir de la gauche, lorsque la relation Y3 > Y2 > Y4 > Y1 est vérifiée, déterminer que les doigts sont ceux d'une main gauche.

27. Programme de détermination d'image simple à quatre doigts selon l'une des revendications 20 à 26, qui a la fonction de,
lorsque la confiance obtenue en fusionnant lesdites confiances est supérieure à une valeur de seuil prédéfinie, décider ladite détermination d'une main et ledit genre de doigt indiqués par ledit résultat de détermination en tant que détermination d'une main et genre de doigt finals et lorsque ladite confiance obtenue par la fusion est inférieure à ladite valeur de seuil, déterminer que la détermination d'une main et la détermination d'un genre de doigt sont inconnues.

# FIG. 1

10

PLAIN FOUR-FINGER IMAGE
DETERMINATION DEVICE

11

PLAIN FOUR-FINGER
IMPRESSION IMAGE
STORAGE UNIT

12

PLAIN
FOUR-FINGER
IMAGE INPUT UNIT

13

21  DATA PROCESSING UNIT

22

DATA PROCESSING
CONTROL UNIT

DATA STORAGE
UNIT

23

PLAIN FOUR-FINGER
IMAGE CUT-OUT UNIT

24

DIRECTION AND
CORE EXTRACTION
UNIT

25

CORE POSITIONAL
RELATIONSHIP
EVALUATION UNIT

26

DIRECTION
COMBINATION
EVALUATION UNIT

27

HAND DETERMINATION
AND KIND OF FINGER
DETERMINATION UNIT

300

PLAIN FOUR-FINGER IMAGE
DETERMINATION PROGRAM

14

CUT-OUT IMAGE
OUTPUT UNIT

# FIG. 2

# FIG. 3

| RIGHT-HAND FOREFINGER | RIGHT-HAND MIDDLE FINGER | RIGHT-HAND RING FINGER | RIGHT-HAND LITTLE FINGER |

# FIG. 4

START

↓

TO INPUT PLAIN FOUR-FINGER IMAGE — 401

↓

PROCESSING OF CUTTING OUT PLAIN FOUR-FINGER IMAGE — 402

↓

PROCESSING OF EXTRACTING DIRECTION AND CORE OF EACH FINGER — 403

↓

HAND DETERMINATION AND KIND OF FINGER CONFIDENCE DETERMINATION PROCESSING BY CORE POSITIONAL RELATIONSHIP EVALUATION — 404

↓

HAND DETERMINATION AND KIND OF FINGER CONFIDENCE DETERMINATION PROCESSING BY DIRECTION COMBINATION EVALUATION — 405

↓

PROCESSING OF ULTIMATELY DECIDING HAND DETERMINATION AND KIND OF FINGER — 406

↓

TO OUTPUT CUT-OUT IMAGE AND HAND DETERMINATION AND KIND OF FINGER — 407

↓

END

# FIG. 5

DENSITY ACCUMULATED
VALUE

X

# FIG. 6

```
        ( START )
            │
            ▼
┌─────────────────────────┐
│ TO ROTATE PLAIN FOUR-FINGER │ 601
│  IMAGE BY PREDETERMINED     │
│      SMALL ANGLE            │
└─────────────────────────┘
            │
            ▼
┌─────────────────────────┐
│    TO EVALUATE DENSITY      │ 602
│    ACCUMULATED VALUE        │
└─────────────────────────┘
            │
            ▼
┌─────────────────────────┐
│ TO DETERMINE WHETHER IT IS  │
│ ROTATION ANGLE WHICH MAKES  │ 603
│ DIFFERENCE BETWEEN FOUR     │
│ CONVEX PEAKS AND THREE      │
│ CONCAVES BE LARGEST         │
└─────────────────────────┘
            │
            ▼
          ◇ 604
    NO  ╱ ROTATION ANGLE TO HAVE ╲
◄──────  LARGEST DIFFERENCE?
         ╲                      ╱
            │ YES
            ▼
┌─────────────────────────┐
│  TO OUTPUT ROTATION ANGLE   │ 605
│  DATA AND CUT-OUT           │
│  POSITION DATA              │
└─────────────────────────┘
            │
            ▼
┌─────────────────────────┐
│ TO STORE CUT-OUT POSITION   │ 606
│ DATA AND ROTATION ANGLE     │
│ DATA IN DATA STORAGE UNIT   │
└─────────────────────────┘
            │
            ▼
         ( END )
```

# FIG. 7

# FIG. 8

FIG. 9

START

TO RECEIVE INPUT OF VARIOUS KINDS OF DATA OF PLAIN FOUR-FINGER IMAGE  — 901

TO CALCULATE COORDINATES AT CORE POSITIONS OF FOUR FINGERS  — 902

RELATIONSHIP AMONG HEIGHTS OF CORE POSITIONS SATISFIES EXPRESSION 1?  — 903 — NO

YES

TO DETERMINE THAT HAND IS "RIGHT HAND" AND KIND OF FINGER IS "FOREFINGER", "MIDDLE FINGER", "RING FINGER" AND "LITTLE FINGER", RESPECTIVELY, FROM LEFT  — 904

RELATIONSHIP AMONG HEIGHTS OF CORE POSITIONS SATISFIES EXPRESSION 2?  — 905 — NO

YES

TO DETERMINE THAT HAND IS "LEFT HAND" AND KIND OF FINGER IS "LITTLE FINGER", "RING FINGER", "MIDDLE FINGER" AND "FOREFINGER", RESPECTIVELY, FROM LEFT  — 906

TO DETERMINE THAT HAND DETERMINATION AND KIND OF FINGER ARE UNKNOWN  — 907

TO STORE CONFIDENCE DATA OF HAND DETERMINATION AND KIND OF FINGER BASED ON CORE POSITION  — 908

END

**FIG.10**

START

TO CALCULATE COORDINATES AT CORE POSITIONS OF THREE FINGERS ~ 1001

RELATIONSHIP AMONG HEIGHTS OF CORE POSITIONS SATISFIES EXPRESSION 3? ~ 1002 — NO

YES

TO DETERMINE THAT HAND IS "RIGHT HAND" AND KIND OF FINGER IS "FOREFINGER", "MIDDLE FINGER" AND "RING FINGER", RESPECTIVELY, FROM LEFT ~ 1003

RELATIONSHIP AMONG HEIGHTS OF CORE POSITIONS SATISFIES EXPRESSION 4? ~ 1004 — NO

YES

TO DETERMINE THAT HAND IS "LEFT HAND" AND KIND OF FINGER IS "RING FINGER", "MIDDLE FINGER" AND "FOREFINGER", RESPECTIVELY, FROM LEFT ~ 1005

RELATIONSHIP AMONG HEIGHTS OF CORE POSITIONS SATISFIES EXPRESSION 5? ~ 1006 — NO

YES

TO DETERMINE THAT HAND IS "RIGHT HAND" AND KIND OF FINGER IS "MIDDLE FINGER", "RING FINGER" AND "LITTLE FINGER", RESPECTIVELY, FROM LEFT ~ 1007

RELATIONSHIP AMONG HEIGHTS OF CORE POSITIONS SATISFIES EXPRESSION 6? ~ 1008 — NO

1010

YES

TO DETERMINE THAT HAND IS "LEFT HAND" AND KIND OF FINGER IS "LITTLE FINGER", "RING FINGER" AND "MIDDLE FINGER", RESPECTIVELY, FROM LEFT ~ 1009

TO DETERMINE THAT HAND DETERMINATION AND KIND OF FINGER ARE UNKNOWN

TO STORE CONFIDENCE DATA OF HAND DETERMINATION AND KIND OF FINGER BASED ON CORE POSITION ~ 1011

END

# FIG.11

# FIG.12

START

TO DETERMINE FINGERPRINT DIRECTION
TENDENCY IN PLAIN FOUR-FINGER IMAGE    1201

1202

THE NUMBER OF FINGERPRINTS
HAVING RIGHTWARD-FLOWING TENDENCY
IS THREE OR MORE?

YES → TO DETERMINE
THAT HAND IS
RIGHT HAND AND
CONFIDENCE IS 90%    1203

NO    1204

THE NUMBER OF FINGERPRINTS
HAVING RIGHTWARD-FLOWING TENDENCY IS TWO AND
NO FINGERPRINT HAS LEFTWARD-FLOWING
TENDENCY?

YES → TO DETERMINE
THAT HAND IS
RIGHT HAND AND
CONFIDENCE IS 70%    1205

NO    1206

THE NUMBER OF FINGERPRINTS
HAVING RIGHTWARD-FLOWING TENDENCY IS TWO AND
THE NUMBER OF FINGERPRINTS HAVING LEFTWARD-
FLOWING TENDENCY IS ONE?

YES → TO DETERMINE
THAT HAND IS
RIGHT HAND AND
CONFIDENCE IS 50%    1207

NO    1208

THE NUMBER OF
FINGERPRINTS HAVING LEFTWARD-FLOWING
TENDENCY IS THREE OR MORE?

YES → TO DETERMINE
THAT HAND IS
LEFT HAND AND
CONFIDENCE IS 90%    1209

NO    1210

THE NUMBER OF
FINGERPRINTS HAVING LEFTWARD-FLOWING
TENDENCY IS TWO AND NO FINGERPRINT
HAS RIGHTWARD-FLOWING
TENDENCY?

YES → TO DETERMINE
THAT HAND IS
LEFT HAND AND
CONFIDENCE IS 70% .    1211

NO    1212

THE NUMBER OF FINGERPRINTS
HAVING LEFTWARD-FLOWING TENDENCY IS TWO
AND THE NUMBER OF FINGERPRINTS HAVING RIGHTWARD-
FLOWING TENDENCY IS ONE?

NO →

YES ↓

TO DETERMINE
THAT HAND
DETERMINATION IS
UNKNOWN    1214

TO DETERMINE THAT
HAND IS LEFT HAND
AND CONFIDENCE IS
50 %    1213

TO DETERMINE KIND OF FINGER BASED
ON RESULT OF HAND DETERMINATION    1215

END

# FIG.13

(A) WHORL PATTERN

(B) ARCH PATTERN

(C)
LEFT SLANTED LOOP PATTERN

(D)
RIGHT SLANTED LOOP PATTERN

# FIG.14

(A)
LEFTWARD-FLOWING
TENDENCY

(B)
RIGHTWARD-FLOWING
TENDENCY

# FIG.15

100 CORE

200
REGION
BELOW CORE

(A)
GRAY IMAGE

100 CORE

200
REGION
BELOW CORE

(B)
DIRECTION DATA

# FIG.16

```
                    ┌─────────────┐
                    │    START    │
                    └──────┬──────┘
                           │
                           ▼
        ┌──────────────────────────────────────┐
        │  TO INTEGRATE CONFIDENCE OF HAND      │      1601
        │ DETERMINATION AND KIND OF FINGER BASED ON │
        │    CORE POSITION AND CONFIDENCE OF    │
        │   THE SAME BASED ON DIRECTION TENDENCY│
        └──────────────────┬───────────────────┘
                           │
                           ▼                            1602
        ┌──────────────────────────────────────┐
        │  TO COMPARE INTEGRATED CONFIDENCE AND │
        │            THRESHOLD VALUE            │
        └──────────────────┬───────────────────┘
                           │
                           ▼                   1603
                  ╱─────────────────╲
                 ╱    INTEGRATED      ╲          NO
                ⟨ CONFIDENCE IS LARGER THAN ⟩───────────────────┐
                 ╲   THRESHOLD VALUE?  ╱                         │
                  ╲─────────┬─────────╱                         │
                           │ YES                          1605  │
                           ▼                                    ▼
        ┌──────────────────────────────────┐         ┌──────────────────┐
        │ TO CONSIDER RESULT OF HAND DETERMINATION│   │   TO DETERMINE   │
        │ AND KIND OF FINGER DETERMINATION BASED ON│  │    THAT HAND     │
        │ CORE POSITION AND HAND DETERMINATION AND│   │  DETERMINATION   │
        │ KIND OF FINGER DETERMINATION BASED ON │     │ AND KIND OF FINGER│
        │   DIRECTION TENDENCY AS ULTIMATE HAND │     │   ARE UNKNOWN    │
        │  DETERMINATION AND KIND OF FINGER     │     └────────┬─────────┘
        └──────────────────┬───────────────────┘  1604        │
                           │                                   │
                           ▼◄──────────────────────────────────┘
                                                        1606
        ┌──────────────────────────────────────┐
        │  TO OUTPUT HAND DETERMINATION AND     │
        │        KIND OF FINGER DATA            │
        └──────────────────┬───────────────────┘
                           │
                           ▼
                    ┌─────────────┐
                    │     END     │
                    └─────────────┘
```

# FIG.17

# FIG.18

# FIG.19

# FIG.20